# EUROPEAN PATENT APPLICATION

(11) **EP 4 804 053 A1**
(43) Date of publication of application: **09.09.2026**
(21) Application number: 24895588.2
(22) Date of filing: 21.06.2024
(51) Int. Cl.: G06F 17/14

(54) **METHOD AND APPARATUS FOR EXECUTING FFT COMPUTATION, AND COMPUTING DEVICE**

(30) Priority: 30.11.2023 CN 202311638516
(71) Applicant: Huawei Technologies Co., Ltd., Shenzhen, Guangdong 518129 (CN)
(72) Inventor: SU, Yun, Shenzhen, Guangdong 518129 (CN); ZOU, Jingyuan, Shenzhen, Guangdong 518129 (CN); WANG, Yongzhong, Shenzhen, Guangdong 518129 (CN)
(74) Representative: Pfenning, Meinig & Partner mbB
(86) International application number: PCT/CN2024/100733
(87) International publication number: WO 2025/112485

(57) **Abstract**

Embodiments of this application relate to the field of computer technologies, and disclose a method and an apparatus for performing FFT computation, and a computing device. The method includes: dividing FFT computation into a plurality of computation stages based on a length of a data sequence on which the FFT computation is to be performed; for at least one target computation stage in the plurality of computation stages, determining, based on radixes respectively corresponding to the plurality of computation stages and an execution order of the target computation stage in the plurality of computation stages, a merged matrix corresponding to the target computation stage, where the merged matrix is a product of a discrete Fourier transform DFT coefficient matrix and a rotation factor in the target computation stage; and during execution of the target computation stage, determining a product of an input sequence of the target computation stage and the merged matrix as an output sequence of the target computation stage. According to this application, an amount of computation corresponding to the computation stages can be reduced, thereby improving efficiency of the FFT computation.

## Description

This application claims priority to Chinese Patent Application No. 202311638516.4, filed on November 30, 2023 and entitled "METHOD AND APPARATUS FOR PERFORMING FFT COMPUTATION, AND COMPUTING DEVICE", which is incorporated herein by reference in its entirety.

### TECHNICAL FIELD

This application relates to the field of computer technologies, and in particular, to a method and an apparatus for performing FFT computation, and a computing device.

### BACKGROUND

Fast Fourier transform (Fast Fourier Transform, FFT) is an efficient algorithm for implementing discrete Fourier transform (Discrete Fourier Transform, DFT).

A current FFT computation process involves a large amount of multiplication of rotation factors. To improve efficiency of FFT computation, in a related technology, multiplication of rotation factors may be implemented through vector multiplication or matrix multiplication. However, because the multiplication of the rotation factors accounts for a large proportion in the entire FFT computation, even if the multiplication of the rotation factors is implemented through the vector multiplication or the matrix multiplication, a large amount of computation is required. As a result, currently, efficiency of the FFT computation is still not high.

### SUMMARY

Embodiments of this application provide a method and an apparatus for performing FFT computation, and a computing device, to improve efficiency of FFT computation. Corresponding technical solutions are as follows:
According to a first aspect, a method for performing FFT computation is provided. The method may be performed by a processor. The method includes:

The processor obtains, in response to a fast Fourier transform FFT computation request, a data sequence on which FFT computation is to be performed; divides the FFT computation into a plurality of computation stages based on a length of the data sequence; for at least one target computation stage in the plurality of computation stages, determines, based on radixes respectively corresponding to the plurality of computation stages and an execution order of the target computation stage in the plurality of computation stages, a merged matrix corresponding to the target computation stage, where the merged matrix is a product of a discrete Fourier transform DFT coefficient matrix and a rotation factor in the target computation stage; sequentially executes the plurality of computation stages, and during execution of the target computation stage, determines a product of an input sequence of the target computation stage and the merged matrix as an output sequence of the target computation stage; and determines, based on an output sequence of a last computation stage in the plurality of computation stages, a computation result of the FFT computation performed on the data sequence.

In the solution shown in this application, when the target computation stage of the FFT computation is executed, the combined matrix obtained by multiplying the DFT coefficient matrix and the rotation factor may be obtained, and then computation in the target computation stage is implemented through the combined matrix. The target computation stage may be any computation stage during the FFT computation. A matrix operation by an input data matrix including the combined matrix and the input sequence is performed, to replace DFT computation and rotation factor computation, so that efficiency of the FFT computation can be improved.

In a possible implementation, when a decimation mode corresponding to the FFT computation is decimation in time, an input sequence of a 1^{st} computation stage in the plurality of computation stages is changed to the data sequence; or when a decimation mode corresponding to the FFT computation is decimation in frequency, an input sequence of a 1^{st} computation stage is changed to a sequence obtained by performing rearrangement processing on the data sequence, where the rearrangement processing is to determine the data sequence as a first multidimensional array whose dimensions at all levels are sequentially the radixes corresponding to the plurality of computation stages, and transpose the first multidimensional array to obtain a second multidimensional array, where an order of dimensions at all levels corresponding to the second multidimensional array is opposite to an order of the dimensions at all levels corresponding to the first multidimensional array.

In the solution shown in this application, the input sequence of the 1^{st} computation stage is changed, so that elements corresponding to a same rotation factor in an input sequence of each computation stage in the FFT computation may be continuously arranged. This can avoid discontinuous reading on the elements in the input sequence during the FFT computation, and improve the efficiency of the FFT computation.

In a possible implementation, the determining, based on radixes respectively corresponding to the plurality of computation stages and an execution order of the target computation stage in the plurality of computation stages, a merged matrix corresponding to the target computation stage includes: determining a rearrangement number corresponding to each section included in the target computation stage, where the rearrangement number indicates an arrangement order of each section in the target computation stage when the input sequence of the 1^{st} computation stage is not changed; and determining, based on the rearrangement number of each section in the target computation stage, a merged matrix corresponding to the section.

In a possible implementation, when the decimation mode of the FFT computation is decimation in frequency, the determining a rearrangement number corresponding to each section included in the target computation stage includes: obtaining a third multidimensional array, where an order of dimensions at all levels of the third multidimensional array is opposite to an order of dimensions at all levels of a fourth multidimensional array, elements in the fourth multidimensional array are sequentially arranged from 0 and a length of the fourth multidimensional array is a quantity of sections included in the target computation stage, and the dimensions of the fourth multidimensional array are sequentially radixes respectively corresponding to computation stages after the target computation stage; and sequentially determining an element in the third multidimensional array as the rearrangement number corresponding to each section included in the target computation stage.

In a possible implementation, when the decimation mode of the FFT computation is decimation in time, the determining a rearrangement number corresponding to each section included in the target computation stage includes: obtaining a fifth multidimensional array, where an order of dimensions at all levels of the fifth multidimensional array is opposite to an order of dimensions at all levels of a sixth multidimensional array, elements in the sixth multidimensional array are sequentially arranged from 0 and a length of the sixth multidimensional array is a quantity of sections included in the target computation stage, and the dimensions of the sixth multidimensional array are sequentially radixes respectively corresponding to computation stages before the target computation stage; and sequentially determining an element in the fifth multidimensional array as the rearrangement number corresponding to each section included in the target computation stage.

In a possible implementation, when the decimation mode of the FFT computation is decimation in time, the determining a rearrangement number corresponding to each section included in the target computation stage includes: obtaining a first sequence matrix, where the first sequence matrix is a transposed matrix of a second sequence matrix, second sequence matrices are sequentially arranged from 0 in row-major order, a quantity of columns of the second sequence matrix is equal to a radix of a previous computation stage of the target computation stage, and a quantity of rows of the second sequence matrix is equal to a product of radixes respectively corresponding to computation stages before the previous computation stage; and sequentially determining an element in the first sequence matrix as the rearrangement number corresponding to each section included in the target computation stage.

In a possible implementation, the method further includes: obtaining a seventh multidimensional array for each computation stage between a 2^{nd} computation stage and a second-to-last computation stage in the plurality of computation stages, where an order of dimensions after a dimension at a 1^{st} level of the seventh multidimensional array is the same as an order of dimensions before a dimension at a last level of an eighth multidimensional array, the dimension at the 1^{st} level of the seventh multidimensional array is equal to the dimension at the last level of the eighth multidimensional array, elements in the eighth multidimensional array are sequentially arranged from 0 and a length of the eighth multidimensional array is a quantity of sections included in the computation stage, the dimension at the last level is a radix corresponding to a previous computation stage of the computation stage, and the dimensions before the dimension at the last level are sequentially radixes respectively corresponding to computation stages before the previous computation stage; determining the seventh multidimensional array as a storage order of sections in each computation stage; and storing computation results for the sections in each computation stage based on the storage order.

In a possible implementation, the determining, based on the rearrangement number of each section in the target computation stage, a merged matrix corresponding to the section includes: determining, based on the rearrangement number of each section in the target computation stage and location information of each element in the merged matrix, imaginary part data and real part data of each element in the merged matrix corresponding to each section, where the rearrangement number, the location information, and the imaginary part data and real part data of each element satisfy the following formulas: $k = \left(Alp+Bpq\right) modN ;$ ${T}_{n}^{l} r \left[p, q\right] = cos \left(-2πk/N\right) ;$ and ${T}_{n}^{l} i \left[p, q\right] = sin \left(-2πk/N\right) .$

*l* represents the rearrangement number, *A* and *B* represent preset coefficients, *N* represents a length of a data sequence, *p* and *q* respectively represent a row number and a column number of an element in a merged matrix, ${T}_{n}^{l} r \left[p, q\right]$ represents real part data corresponding to an element in a *p* ^{th} row and a *q* ^{th} column in a merged matrix corresponding to an *l* ^{th} section in an *n* ^{th} computation stage, and ${T}_{n}^{l} i \left[p, q\right]$ represents imaginary part data corresponding to the element in the *p* ^{th} row and the *q* ^{th} column in the merged matrix corresponding to the *l* ^{th} section in the *n* ^{th} computation stage.

In the solution shown in this application, a rearrangement number of each section in each computation stage may be substituted into a corresponding formula, to obtain a corresponding combined matrix. Compared with a conventional technology in which a rotation factor matrix and a DFT matrix are first determined, and then a matrix multiplication operation on the rotation factor matrix and the DFT matrix is performed to obtain a combined matrix, an amount of computation for obtaining the combined matrix can be reduced, so that the efficiency of the FFT computation is improved.

In a possible implementation, the determining a product of an input sequence of the target computation stage and the merged matrix as an output sequence of the target computation stage includes: arranging all odd-indexed rows in the merged matrix after all even-indexed rows, or arranging all even-indexed rows in the merged matrix after all odd-indexed rows, to obtain a rearranged merged matrix; and determining a product of the input sequence of the target computation stage and the rearranged merged matrix as the output sequence of the target computation stage.

In the solution shown in this application, the odd-indexed rows and the even-indexed rows of the merged matrix are first rearranged, and then computation is performed based on the rearranged merged matrix and the input data matrix. In an obtained result matrix, real part data of a complex number is continuously arranged, and imaginary part data of the complex number is continuously arranged. In this way, discontinuous reading on the real part data and the imaginary part data in the result matrix can be avoided when the result matrix is converted into an output sequence. This can improve efficiency of obtaining the output sequence, and further improve the efficiency of the FFT computation.

In a possible implementation, the dividing the FFT computation into a plurality of computation stages based on a length of the data sequence includes: dividing the FFT computation into the plurality of computation stages based on the length of the data sequence and priorities corresponding to a plurality of candidate radixes, and determining a radix corresponding to each computation stage, where the candidate radix is less than or equal to half of a computation size of a matrix multiplication unit for performing the FFT computation, and a priority of the candidate radix is in direct proportion to a value of the candidate radix. In this way, a size of the radix corresponding to each computation stage is set based on the computation size of the matrix multiplication unit, so that utilization of the matrix multiplication unit can be improved, and the efficiency of the FFT computation can be improved.

In a possible implementation, the at least one target computation stage is a computation stage other than the 1^{st} computation stage and the last computation stage in the plurality of computation stages.

According to a second aspect, an apparatus for performing FFT computation is provided. The apparatus includes:
an obtaining module, configured to obtain, in response to a fast Fourier transform FFT computation request, a data sequence on which FFT computation is to be performed;
a division module, configured to divide the FFT computation into a plurality of computation stages based on a length of the data sequence;
a determining module, configured to: for at least one target computation stage in the plurality of computation stages, determine, based on radixes respectively corresponding to the plurality of computation stages and an execution order of the target computation stage in the plurality of computation stages, a merged matrix corresponding to the target computation stage, where the merged matrix is a product of a discrete Fourier transform DFT coefficient matrix and a rotation factor in the target computation stage; and
an execution module, configured to sequentially execute the plurality of computation stages, and during execution of the target computation stage, determine a product of an input sequence of the target computation stage and the merged matrix as an output sequence of the target computation stage, where
the determining module is configured to determine, based on an output sequence of a last computation stage in the plurality of computation stages, a computation result of the FFT computation performed on the data sequence.

In a possible implementation, when a decimation mode corresponding to the FFT computation is decimation in time, an input sequence of a 1^{st} computation stage in the plurality of computation stages is changed to the data sequence; or when a decimation mode corresponding to the FFT computation is decimation in frequency, an input sequence of a 1^{st} computation stage is changed to a sequence obtained by performing rearrangement processing on the data sequence, where the rearrangement processing is to determine the data sequence as a first multidimensional array whose dimensions at all levels are sequentially the radixes corresponding to the plurality of computation stages, and transpose the first multidimensional array to obtain a second multidimensional array, where an order of dimensions at all levels corresponding to the second multidimensional array is opposite to an order of the dimensions at all levels corresponding to the first multidimensional array.

In a possible implementation, the determining module is configured to: determine a rearrangement number corresponding to each section included in the target computation stage, where the rearrangement number indicates an arrangement order of each section in the target computation stage when the input sequence of the 1^{st} computation stage is not changed; and determine, based on the rearrangement number of each section in the target computation stage, a merged matrix corresponding to the section.

In a possible implementation, when the decimation mode of the FFT computation is decimation in frequency, the determining module is configured to: obtain a third multidimensional array, where an order of dimensions at all levels of the third multidimensional array is opposite to an order of dimensions at all levels of a fourth multidimensional array, elements in the fourth multidimensional array are sequentially arranged from 0 and a length of the fourth multidimensional array is a quantity of sections included in the target computation stage, and the dimensions of the fourth multidimensional array are sequentially radixes respectively corresponding to computation stages after the target computation stage; and sequentially determine an element in the third multidimensional array as the rearrangement number corresponding to each section included in the target computation stage.

In a possible implementation, when the decimation mode of the FFT computation is decimation in time, the determining module is configured to: obtain a fifth multidimensional array, where an order of dimensions at all levels of the fifth multidimensional array is opposite to an order of dimensions at all levels of a sixth multidimensional array, elements in the sixth multidimensional array are sequentially arranged from 0 and a length of the sixth multidimensional array is a quantity of sections included in the target computation stage, and the dimensions of the sixth multidimensional array are sequentially radixes respectively corresponding to computation stages before the target computation stage; and sequentially determine an element in the fifth multidimensional array as the rearrangement number corresponding to each section included in the target computation stage.

In a possible implementation, when the decimation mode of the FFT computation is decimation in time, the determining module is configured to: obtain a first sequence matrix, where the first sequence matrix is a transposed matrix of a second sequence matrix, second sequence matrices are sequentially arranged from 0 in row-major order, a quantity of columns of the second sequence matrix is equal to a radix of a previous computation stage of the target computation stage, and a quantity of rows of the second sequence matrix is equal to a product of radixes respectively corresponding to computation stages before the previous computation stage; and sequentially determine an element in the first sequence matrix as the rearrangement number corresponding to each section included in the target computation stage.

In a possible implementation, the apparatus further includes a storage module, configured to: obtain a seventh multidimensional array for each computation stage between a 2^{nd} computation stage and a second-to-last computation stage in the plurality of computation stages, where an order of dimensions after a dimension at a 1^{st} level of the seventh multidimensional array is the same as an order of dimensions before a dimension at a last level of an eighth multidimensional array, the dimension at the 1^{st} level of the seventh multidimensional array is equal to the dimension at the last level of the eighth multidimensional array, elements in the eighth multidimensional array are sequentially arranged from 0 and a length of the eighth multidimensional array is a quantity of sections included in the computation stage, the dimension at the last level is a radix corresponding to a previous computation stage of the computation stage, and the dimensions before the dimension at the last level are sequentially radixes respectively corresponding to computation stages before the previous computation stage; determine the seventh multidimensional array as a storage order of sections in each computation stage; and store computation results for the sections in each computation stage based on the storage order.

In a possible implementation, the determining module is configured to: determine, based on the rearrangement number of each section in the target computation stage and location information of each element in the merged matrix, imaginary part data and real part data of each element in the merged matrix corresponding to each section, where the rearrangement number, the location information, and the imaginary part data and real part data of each element satisfy the following formulas: $k = \left(Alp+Bpq\right) modN ;$ ${T}_{n}^{l} r \left[p, q\right] = cos \left(-2πk/N\right) ;$ and ${T}_{n}^{l} i \left[p, q\right] = sin \left(-2πk/N\right) .$

*l* represents the rearrangement number, *A* and *B* represent preset coefficients, *N* represents a length of a data sequence, *p* and *q* respectively represent a row number and a column number of an element in a merged matrix, ${T}_{n}^{l} r \left[p, q\right]$ represents real part data corresponding to an element in a *p* ^{th} row and a *q* ^{th} column in a merged matrix corresponding to an *l* ^{th} section in an *n* ^{th} computation stage, and ${T}_{n}^{l} i \left[p, q\right]$ represents imaginary part data corresponding to the element in the *p* ^{th} row and the *q* ^{th} column in the merged matrix corresponding to the *l* ^{th} section in the *n* ^{th} computation stage.

In a possible implementation, the determining module is configured to:
arrange all odd-indexed rows in the merged matrix after all even-indexed rows, or arrange all even-indexed rows in the merged matrix after all odd-indexed rows, to obtain a rearranged merged matrix; and determine a product of the input sequence of the target computation stage and the rearranged merged matrix as the output sequence of the target computation stage.

In a possible implementation, the division module is configured to: divide the FFT computation into the plurality of computation stages based on the length of the data sequence and priorities corresponding to a plurality of candidate radixes, and determine a radix corresponding to each computation stage, where the candidate radix is less than or equal to half of a computation size of a matrix multiplication unit for performing the FFT computation, and a priority of the candidate radix is in direct proportion to a value of the candidate radix.

In a possible implementation, the at least one target computation stage is a computation stage other than the 1^{st} computation stage and the last computation stage in the plurality of computation stages.

According to a third aspect, a computing device is provided. The computing device includes a processor and a memory. The processor is configured to execute instructions stored in the memory, to enable the computing device to perform the method according to the first aspect.

According to a fourth aspect, a computer program product including instructions is provided. When the instructions are run on a computing device, the computing device is enabled to perform the method according to the first aspect.

According to a fifth aspect, a computer-readable storage medium is provided. The computer-readable storage medium includes computer program instructions. When the computer program instructions are executed by a computing device, the computing device performs the method according to the first aspect.

### BRIEF DESCRIPTION OF DRAWINGS

FIG. 1 is a flowchart of implementing 18-point FFT computation by using Cooley-Tukey;
FIG. 2 is a diagram of a method for performing FFT computation according to an embodiment of this application;
FIG. 3 is a butterfly network diagram of implementing 8-point decimation-in-frequency FFT computation and 8-point decimation-in-frequency FFT computation respectively in a related technology;
FIG. 4 is a diagram of a structure of a computing device according to an embodiment of this application;
FIG. 5 is a flowchart of a method for performing FFT computation according to an embodiment of this application;
FIG. 6 is a flowchart of a method for a data sequence according to an embodiment of this application; and
FIG. 7 is a diagram of a structure of an apparatus for performing FFT computation according to an embodiment of this application.

### DESCRIPTION OF EMBODIMENTS

To make objectives, technical solutions, and advantages of this application clearer, the following further describes implementations of this application in detail with reference to the accompanying drawings.

Discrete Fourier transform (Discrete Fourier Transform, DFT) is a discrete form of Fourier transform on both time domain data and frequency domain data, and is used to transform discrete time domain sampling data into discrete frequency domain sampling data. In a data form, input data (the discrete time domain sampling data) and output data (the discrete frequency domain data) of the DFT are complex sequences with finite lengths, and the lengths of the two complex sequences are the same.

Fast Fourier transform (Fast Fourier Transform, FFT) is an algorithm for quickly calculating discrete Fourier transform (DFT) or inverse discrete Fourier transform (IDFT). By recursively decomposing DFT with a long complex sequence into DFT of a short complex sequence, computation complexity of original O(N²) of the DFT can be reduced to O(NlogN), where N represents a length of the long complex sequence.

A Cooley-Tukey (Cooley-Tukey) algorithm is a common FFT algorithm. According to a divide and conquer strategy, the algorithm may be used to decompose DFT of a complex sequence with a length of N into N1 DFTs with a length of N2, and perform complex multiplication of the DFTs and a rotation factor, where N=N1*N2.

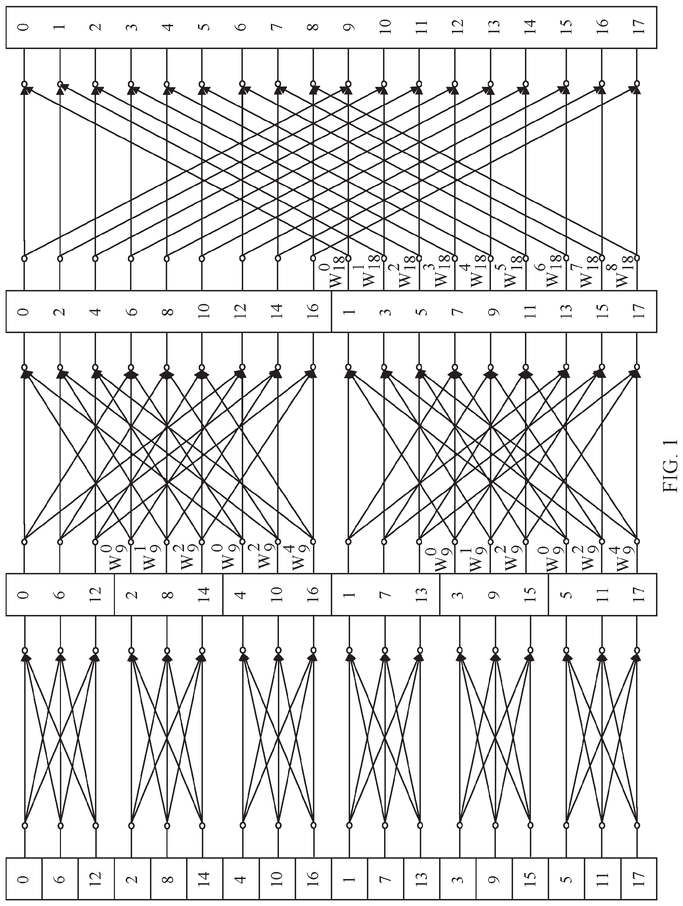

FIG. 1 is a flowchart of implementing 18-point FFT computation by using the Cooley-Tukey algorithm. The flowchart may be referred to as a butterfly network. As shown in FIG. 1, an FFT computation process may be decomposed into a plurality of computation stages (stages). A quantity of computation stages is equal to a quantity of radixes (radixes) into which a length of a data sequence on which FFT computation is performed is divided. The data sequence is a complex sequence, and FFT computation on a data sequence with a length of N may be referred to as N-point FFT computation. For example, for the N-point FFT computation, it is assumed that N may be decomposed into N1, N2, ..., and Ni (N=N1*N2*...*Ni). In this case, i computation stages may be included in the N-point FFT computation. N1, N2, ..., and Ni may be referred to as radixes. N1 is a radix corresponding to a 1^{st} computation stage, N2 is a radix corresponding to a 2^{nd} computation stage, and Ni is a radix corresponding to an i^{th} computation stage.

In the FFT computation, an input sequence of the 1^{st} computation stage may be obtained based on the data sequence on which the FFT computation is performed. For other computation stages after the 1^{st} computation stage, an input sequence of each computation stage is obtained based on an output sequence of a previous computation stage, and lengths of input sequences of all computation stages are the same. One computation stage may be divided into at least one section (section), and one section may be divided into at least one butterfly (butterfly) unit. Butterfly computation is performed on each butterfly unit in a computation stage, so that an output sequence of the computation stage may be obtained. One computation stage includes N/Ni butterfly units, where N represents a length of input data in the computation stage, and Ni represents a radix corresponding to the computation stage. The butterfly computation performed on the butterfly unit may be divided into rotation factor computation and DFT computation. In an example, the rotation factor computation may be complex vector multiplication of input data of the butterfly unit and a rotation factor, and the DFT computation may be complex matrix multiplication of rotated input data (input data obtained through complex multiplication of the original input data and the rotation factor) and a DFT coefficient matrix corresponding to the butterfly unit. The DFT coefficient matrix corresponding to the butterfly unit is related to a structure of the butterfly unit, and DFT coefficient matrixes corresponding to butterfly units in each computation stage are the same. Alternatively, in another example, the DFT computation may be complex matrix multiplication of input data of the butterfly unit and a DFT coefficient matrix, and the rotation factor computation may be complex vector multiplication of a rotation factor and a computation result corresponding to the complex matrix multiplication. The DFT coefficient matrix corresponding to the butterfly unit is related to a structure of the butterfly unit, and DFT coefficient matrixes corresponding to butterfly units in each computation stage are the same. In each computation stage, a plurality of butterfly units may correspond to a same rotation factor.

Each computation stage in the FFT computation includes a large amount of rotation factor computation and DFT computation. Currently, the rotation factor computation may be implemented through a vector operation or a matrix operation, to improve efficiency of the FFT computation. However, an optimization effect on the efficiency of the FFT computation is still not ideal.

Embodiments of this application provide a method for performing FFT computation. In the method, a product of a rotation factor in each computation stage in the FFT computation and a corresponding DFT coefficient matrix may be determined before the FFT computation is performed. The product may be referred to as a combined matrix in embodiments of this application. In this way, in a process of the FFT computation, in each computation stage, an output sequence of each computation stage may be obtained by multiplying an input sequence by a corresponding combined matrix. In this way, multiplication of the rotation factors in the process of the FFT computation is avoided, and the efficiency of the FFT computation can be improved.

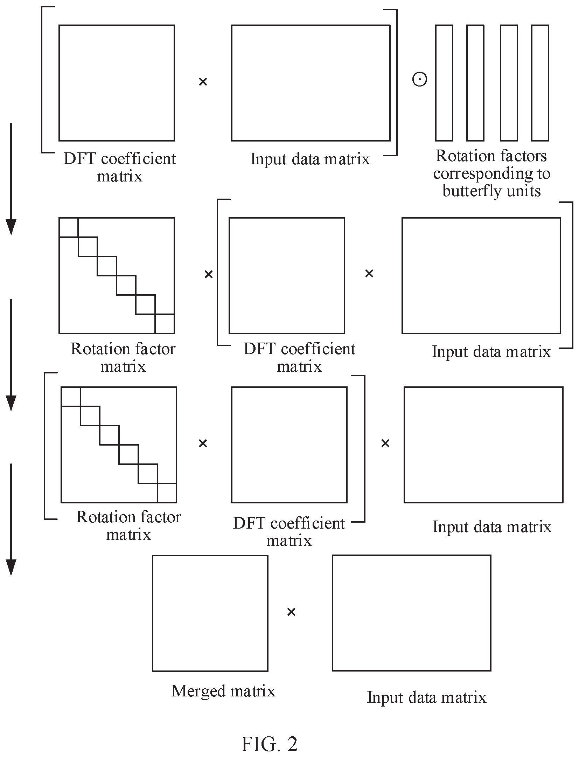

FIG. 2 is a diagram of a method for performing FFT computation according to an embodiment of this application. As shown in FIG. 2, originally, a computation stage may include a matrix multiplication operation on a DFT matrix and an input data matrix including input data of each butterfly unit in the computation stage, and a vector multiplication operation on a result corresponding to the matrix multiplication and a rotation factor of each butterfly unit. If rotation factors corresponding to a plurality of butterfly units are the same, the rotation factors corresponding to the plurality of butterfly units may be converted into a diagonal matrix (which may be referred to as a rotation factor matrix), and a matrix operation is performed on the result corresponding to the matrix multiplication and the diagonal matrix. Then, by using the **associative property of matrix multiplication**, computation in the computation stage may include a matrix multiplication operation on the rotation factor matrix and the DFT matrix, and a matrix multiplication operation on the rotation factor matrix and the input data matrix. In each computation stage, the DFT matrix and the rotation factor matrix are fixed, a result of the matrix multiplication operation performed on the DFT matrix and the rotation factor matrix is fixed, that is, a combined matrix corresponding to each computation stage is fixed. Therefore, in a process of FFT computation, the combined matrix corresponding to each computation stage may be obtained to perform computation corresponding to each computation stage, so that rotation factor computation in the computation stage can be avoided. This further reduces an amount of computation corresponding to each computation stage, and improves efficiency of the FFT computation.

To facilitate understanding of embodiments of this application, the following first describes some terms used in embodiments of this application.

A multidimensional array is an array that includes at least two dimensions. In an example, two-dimensional data is a matrix, a quantity of rows in the matrix is a 1^{st} dimension in the two-dimensional data, where the 1^{st} dimension is also referred to as a level-1 dimension, and a quantity of columns in the matrix is a 2^{nd} dimension in the two-dimensional data, where the 2^{nd} dimension is also referred to as a level-2 dimension. Correspondingly, a three-dimensional array includes three levels of dimensions, and an n-dimensional array includes n levels of dimensions.

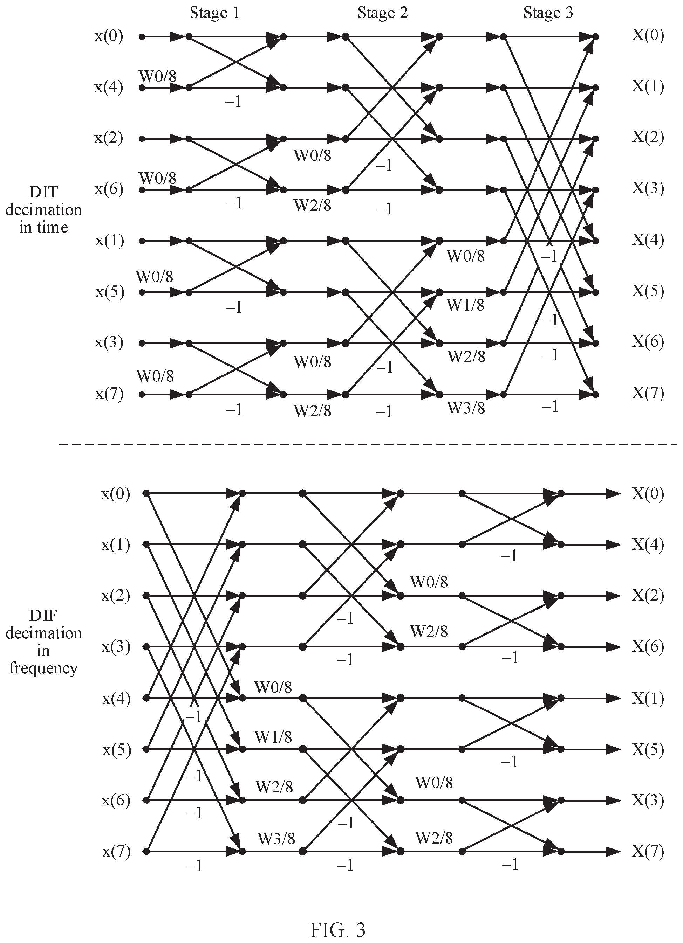

Decimation in frequency and decimation in time are two methods for implementing FFT computation. FIG. 3 is a butterfly network diagram of implementing 8-point decimation-in-frequency FFT computation and 8-point decimation-in-frequency FFT computation respectively in a related technology.

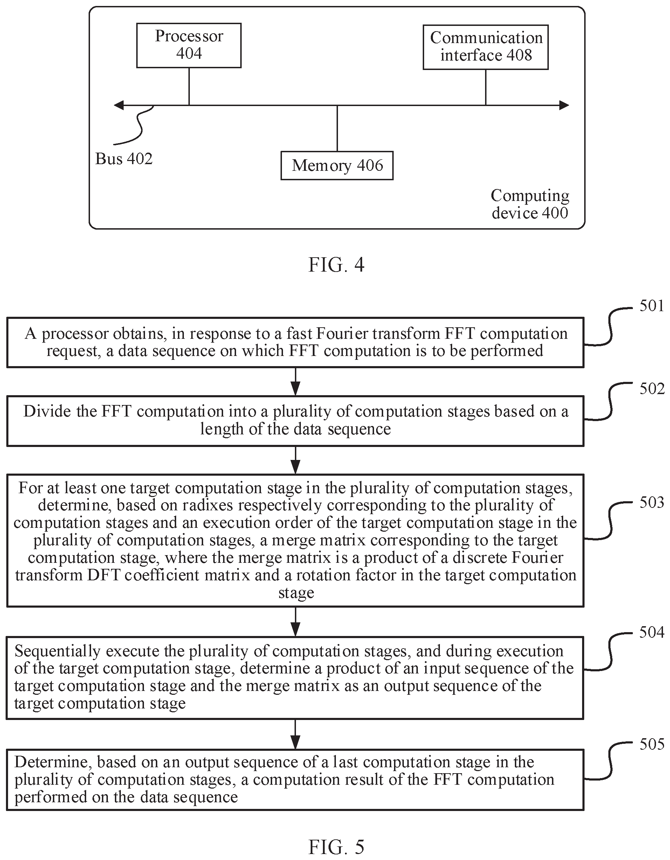

FIG. 4 is a diagram of a structure of a computing device according to an embodiment of this application. As shown in FIG. 4, a computing device 400 may include a bus 402, a processor 404, and a memory 406. Optionally, the computing device 400 may further include a communication interface 408. The processor 404, the memory 406, and the communication interface 408 communicate with each other through the bus 402. The computing device 400 may be a server or a terminal device. It should be understood that a quantity of processors and a quantity of memories in the computing device 400 are not limited in this application. The computing device 400 may be a device for running a model, or may be a terminal or a server. When the computing device 400 is a terminal, the computing device 400 includes but is not limited to a desktop computer, a mobile phone, a notebook computer, a tablet computer, or the like. When the computing device 400 is a server, the computing device 400 may be an independent server, may be a server cluster including a plurality of servers, may be a physical entity machine, or may be a virtual machine, a container, or the like that is virtualized by using a virtualization technology.

The bus 402 may be a peripheral component interconnect (peripheral component interconnect, PCI) bus, an extended industry standard architecture (extended industry standard architecture, EISA) bus, or the like. The bus may be classified into an address bus, a data bus, a control bus, and the like. For ease of representation, only one line is used in FIG. 4 to represent the bus, but this does not indicate that there is only one bus or only one type of bus. The bus 402 may include a path for transmitting information between components (for example, the memory 406, the processor 404, and the communication interface 408) of the computing device 400.

The processor 404 may include any one or more of processors such as a central processing unit (central processing unit, CPU), a graphics processing unit (graphics processing unit, GPU), a microprocessor (microprocessor, MP), or a digital signal processor (digital signal processor, DSP). The processor 404 may further include a matrix multiplication unit that may be configured to perform a matrix multiplication operation involved in an FFT computation process.

The memory 406 may include a volatile memory (volatile memory), for example, a random access memory (random access memory, RAM). The memory 406 may further include a non-volatile memory (non-volatile memory), for example, a read-only memory (read-only memory, ROM), a flash memory, a hard disk drive (hard disk drive, HDD), or a solid state drive (solid state drive, SSD). The memory 406 may store program code, and the processor 404 may execute the program code to implement a method for performing FFT computation provided in this embodiment of this application. For example, a data sequence on which FFT computation is to be performed is obtained in response to a fast Fourier transform FFT computation request; the FFT computation is divided into a plurality of computation stages based on a length of the data sequence; the plurality of computation stages are sequentially executed, and during execution of the target computation stage, a product of an input sequence of the target computation stage and the merged matrix is determined as an output sequence of the target computation stage; and a computation result of the FFT computation performed on the data sequence is determined based on an output sequence of a last computation stage in the plurality of computation stages.

The communication interface 408 implements communication between the computing device 400 and another device or a communication network by using a transceiver module, for example, but not limited to a network interface card or a transceiver.

FIG. 5 is a flowchart of a method for performing FFT computation according to an embodiment of this application. The method may be performed by the computing device 400 shown in FIG. 4, and may be further performed by the processor 404 in the computing device 400. As shown in FIG. 5, the method includes the following steps.

Step 501: The processor obtains, in response to a fast Fourier transform FFT computation request, a data sequence on which FFT computation is to be performed.

During implementation, an application for performing FFT computation may be run on the computing device. For example, the application may be a high performance computing (High Performance Computing, HPC) application, an artificial intelligence (Artificial Intelligence, AI) application, or the like. During running, when the FFT computation needs to be performed, the application may send an FFT execution request to the processor. For example, the application may be a VASP (Vienna Ab-initio Simulation Package). When a wave function needs to be solved in the VASP, a wave function solving request may be sent to the processor, where the wave function solving request is the FFT execution request. The wave function is a common function in the field of quantum mechanics. The wave function may be solved by performing the FFT computation on input data of the wave function, to obtain a solution result of the wave function.

After receiving the FFT computation execution request, the processor may obtain the data sequence on which the FFT computation is to be performed, and perform subsequent steps 502 to 505. The data sequence on which the FFT computation is to be performed may be carried in the FFT computation execution request.

In an example, for the method for performing FFT computation provided in this application, a person skilled in the art may compile a corresponding processing program into an FFT processing function, and add the FFT processing function to a mathematics library. The mathematics library may be stored in a computing device that executes an application, and includes a large quantity of processing functions. The processing functions may be used to implement various types of mathematical computation in the application. When the FFT computation needs to be performed in the application, the FFT execution request may be sent to the processor, and then the processor may invoke and execute the FFT processing function to implement processing in the following steps.

Step 502: Divide the FFT computation into a plurality of computation stages based on a length of the data sequence.

In an example, after receiving the FFT computation execution request, the processor may obtain a length of input data on which the FFT computation is to be performed, and decompose the FFT computation into the plurality of computation stages. For example, the processor may decompose the length of the input data based on a Cooley-Tukey algorithm, to obtain computation stages in which the FFT computation is performed on the input data and radixes corresponding to the computation stages. For example, when a quantity of data elements in the input data is 8, 8 may be decomposed into 2*2*2. A process of performing the FFT computation on the input data includes three computation stages, and a radix corresponding to each computation stage is 2. For example, when a quantity of data elements in the input data is 27, 27 may be decomposed into 3*3*3. A process of performing the FFT computation on the input data includes three computation stages, and a radix corresponding to each computation stage is 3.

Step 503: For at least one target computation stage in the plurality of computation stages, determine, based on radixes respectively corresponding to the plurality of computation stages and an execution order of the target computation stage in the plurality of computation stages, a merged matrix corresponding to the target computation stage, where the merged matrix is a product of a discrete Fourier transform DFT coefficient matrix and a rotation factor in the target computation stage.

In the FFT computation, after a quantity of computation stages and the radix of each computation stage are determined, a DFT sparse matrix corresponding to each computation stage and a rotation factor corresponding to an element at each location in an input sequence of each computation stage are also determined accordingly. In other words, in the FFT computation, after the quantity of computation stages and the radix of each computation stage are determined, a combined matrix corresponding to each computation stage may also be determined accordingly.

The target computation stage is a computation stage in which DFT matrix computation and rotation factor computation are implemented through a combined matrix during the FFT computation. The target computation stage may be any computation stage in the plurality of computation stages included in the FFT computation, for example, may be each computation stage in the plurality of computation stages. In an example, the computing device may pre-store a quantity of the plurality of computation stages, an execution order of a computation stage in the plurality of computation stages, a radix corresponding to the computation stage, and a correspondence between the computation stage and a combined matrix. Before the FFT computation is performed, the combined matrix corresponding to the target computation stage may be determined based on the correspondence.

Step 504: Sequentially execute the plurality of computation stages, and during execution of the target computation stage, determine a product of an input sequence of the target computation stage and the merged matrix as an output sequence of the target computation stage.

After the combined matrix corresponding to the target computation stage is determined, the plurality of computation stages in the FFT computation may be sequentially executed. Each time the target computation stage is executed, the input sequence of the target computation stage may be converted into an input data matrix, and then a multiplication operation on the input data matrix and the combined matrix is performed through a matrix multiplication unit included in the processor.

Step 505: Determine, based on an output sequence of a last computation stage in the plurality of computation stages, a computation result of the FFT computation performed on the data sequence.

After each computation stage in the FFT computation is sequentially performed, the output sequence of the last computation stage may be determined as the computation result of the FFT computation, and the result is returned to the application that sends the FFT computation request.

In this embodiment of this application, only one matrix multiplication operation needs to be performed, to complete the rotation factor computation and the DFT computation that are included in the target computation stage, so that efficiency of executing the target computation stage can be improved, thereby improving efficiency of the FFT computation.

FFT computation may be classified into decimation-in-time computation and decimation-in-frequency computation. The method for performing FFT computation provided in embodiments of this application is further described below with reference to a decimation mode for implementing the FFT computation in embodiments of this application.

### Solution 1: Perform decimation-in-frequency FFT computation.

Step R1: Obtain a data sequence on which the FFT computation is to be performed.

Step R2: Divide the FFT computation into a plurality of computation stages based on a length of the data sequence.

During implementation, the FFT computation may be divided into the plurality of computation stages with reference to the length of the data sequence and a computation size of a matrix multiplication unit that is in a processor and that performs a matrix multiplication operation.

In each computation stage, a size of a combined matrix is equal to a size of a DFT coefficient matrix, and the size of the DFT coefficient matrix is related to a radix corresponding to the computation stage. For example, if the radix corresponding to the computation stage is 8, the size of the DFT coefficient matrix and the size of the combined matrix are calculated to be 8*8. In addition, during actual computation, real part data and imaginary part data in the combined matrix are split into 2*2 matrixes. Therefore, during the actual computation, the size of the combined matrix is 16*16. In other words, when a radix of a computation stage is n, a combination size corresponding to the computation stage is 2n*2n during the actual computation.

The computation size of the matrix multiplication unit may indicate a maximum matrix size supported by the matrix multiplication unit in performing one matrix multiplication operation. For example, if the maximum matrix size supported by the matrix multiplication unit in performing one matrix multiplication operation is M*M, the computation size of the matrix multiplication unit may be M. During one matrix multiplication operation performed by the matrix multiplication unit, when a size of a matrix on which the matrix multiplication operation is performed is closer to the maximum matrix size corresponding to the matrix multiplication unit, utilization of the matrix multiplication unit is higher. Therefore, when a radix of each computation stage is determined, the radix corresponding to each computation stage may be equal to half of the computation size of the matrix multiplication unit as much as possible, so that the utilization of the matrix multiplication unit is improved. For example, when the computation size of the matrix multiplication unit is 16, and a radix corresponding to a computation stage is 8, a size of a combined matrix corresponding to the computation stage is 16*16. Therefore, when the matrix multiplication unit performs an operation in the computation stage, the combined matrix may fully occupy the matrix multiplication unit, so that performance of the matrix multiplication unit can be fully utilized.

In an example, a plurality of candidate radixes may be preset, and a corresponding priority is set for each candidate radix. The plurality of candidate radixes are less than or equal to half of a computation size of a matrix multiplication unit for performing the FFT computation, and a priority of the candidate radix is in direct proportion to a value of the candidate radix.

During division of the FFT computation into the plurality of computation stages, the FFT computation may be divided into the plurality of computation stages based on the plurality of set candidate radixes, and a radix of each computation stage is determined. For example, if the computation size of the matrix multiplication unit is 16, the plurality of candidate radixes may be 8, 7, 6, 5, 4, 3, and 2 respectively, and priorities of the plurality of candidate radixes are in descending order.

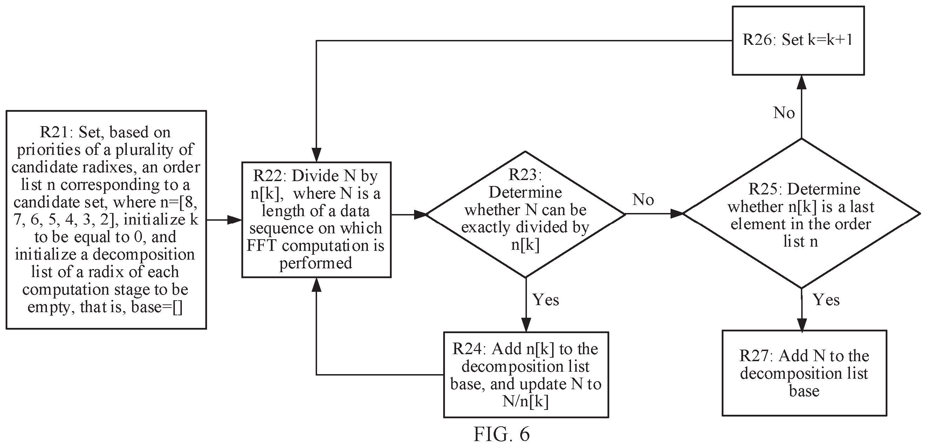

FIG. 6 is a flowchart of a method for a data sequence according to an embodiment of this application. As shown in FIG. 6, the method includes the following steps.

Step R21: Set, based on the priorities of the plurality of candidate radixes, an order list n corresponding to a candidate set, where n=[8, 7, 6, 5, 4, 3, 2], initialize k to be equal to 0, and initialize a decomposition list of the radix of each computation stage to be empty, that is, base=[].

Step R22: Divide N by n[k], where N is the length of the data sequence on which the FFT computation is performed.

Step R23: Determine whether N can be exactly divided by n[k].

If N can be exactly divided by n[k], step R24 is performed; or if N cannot be exactly divided by n[k], step R25 is performed.

Step R24: Add n[k] to the decomposition list base, update N to N/n[k], and perform step R22.

Step R25: Determine whether n[k] is a last element in the order list n.

If n[k] is not the last element in the order list n, step R26 is performed; or if n[k] is the last element in the order list n, step R28 is performed.

Step R26: Set k=k+1, and perform step R22.

Step R27: Add N to the decomposition list base.

After step R27 is performed, a quantity of elements included in the decomposition list base is a quantity of computation stages in the FFT computation, and the elements included in the decomposition list base are sequentially radixes corresponding to the computation stages.

In this way, by using the method for decomposing a data sequence shown in FIG. 6, the radix of each computation stage in the FFT computation may be equal to half of the computation size of the matrix multiplication unit as much as possible, so that utilization of the matrix multiplication unit can be improved, and efficiency of the FFT computation can be improved.

Step R3: Rearrange the data sequence on which the FFT computation is performed, and determine a rearranged data sequence as an input sequence of a 1^{st} computation stage in the FFT computation.

In a conventional decimation-in-frequency FFT computation process, the input sequence of the 1^{st} computation stage in the FFT computation is the data sequence on which the FFT computation is performed. After computation in a last computation stage is completed, rearrangement processing needs to be performed on an output sequence of the last computation stage, to obtain a result sequence of the FFT computation. However, in the conventional decimation-in-frequency FFT computation process, elements corresponding to a same rotation factor are not continuously arranged in an input sequence of a computation stage. In this way, in a process of loading the input sequence to a vector register or a matrix register in a form of an input data matrix, discontinuous reading needs to be performed on the input sequence.

To avoid a problem of discontinuous reading, compared with the conventional decimation-in-frequency FFT computation process, in this embodiment of this application, an arrangement order of elements in the input sequence of the 1^{st} computation stage is modified. In this way, when an output sequence corresponding to each computation stage is used as an input sequence corresponding to a next computation stage, elements corresponding to a same rotation factor of the next computation stage may be continuously arranged in the input sequence.

Performing rearrangement processing on the elements in the input sequence of the 1^{st} computation stage may include: determining the data sequence as a first multidimensional array whose dimensions at all levels are sequentially the radixes corresponding to the plurality of computation stages, and transposing the first multidimensional array to obtain a second multidimensional array, where an order of dimensions at all levels corresponding to the second multidimensional array is opposite to an order of the dimensions at all levels corresponding to the first multidimensional array.

For example, the FFT computation includes m computation stages, and radixes corresponding to the m computation stages are respectively N1, N2, ..., and Nm. During implementation, the data sequence on which the FFT computation is performed may be transposed to the first multidimensional array whose dimensions are sequentially N1, N2, ..., and Nm. Then, the first multidimensional array is transposed to the second multidimensional array whose dimensions are sequentially Nm, Nm-1, ..., and N1. An order of elements in the second multidimensional array is an order of the elements in an input sequence that is of the 1^{st} computation stage and that is obtained through rearrangement. The input sequence of the first computation stage after rearrangement is actually also an input sequence of a 1^{st} computation stage in a conventional decimation-in-time FFT computation process.

8-point FFT computation and the 8-point FFT computation including three computation stages are used as an example, N=[0, 1, 2, 3, 4, 5, 6, 7] is the input sequence of the 1^{st} computation stage before the rearrangement, and N=[0, 4, 2, 6, 1, 5, 3, 7] is the input sequence of the 1^{st} computation stage after the rearrangement. As shown in FIG. 3, before the rearrangement, elements corresponding to a rotation factor W2/8 in a 2^{nd} computation stage are respectively located at a 4^{th} position and an 8^{th} position of an input sequence; and after the rearrangement, the elements corresponding to the rotation factor W2/8 in the 2^{nd} computation stage are respectively located at a 7^{th} position and the 8^{th} position of the input sequence.

It can be learned that, in this embodiment of this application, after the input sequence of the 1^{st} computation stage is rearranged, elements corresponding to a same rotation factor in an input sequence of each computation stage are continuously arranged. In this way, in this embodiment of this application, the elements corresponding to the same rotation factor in the input sequence may be read, and are stored in the vector register or the matrix register as each row of the input data matrix, so that discontinuous reading on the input sequence can be avoided, thereby improving the efficiency of the FFT computation.

Step R4: Determine a combined matrix corresponding to a target computation stage in the plurality of computation stages.

An element and a rotation factor in the DFT coefficient matrix in each computation stage may be obtained through calculation by using a trigonometric function with a periodicity of N, where N is the length of the data sequence on which the FFT computation is performed. Therefore, each element in the combined matrix may also be obtained through calculation by using the trigonometric function with the periodicity of N. Based on this, this application provides an example of a method for determining a combined matrix based on a trigonometric function with a periodicity of N. The method is as follows:
Step R41: Determine a rearrangement number corresponding to each section included in the target computation stage, where the rearrangement number indicates an arrangement order of each section in the target computation stage when the input sequence of the 1^{st} computation stage is not changed.

Because the input sequence of the 1^{st} computation stage is rearranged in step R2, an order of sections in each computation stage is different from an order of sections in each computation stage in the conventional FFT computation. Therefore, in this embodiment of this application, the arrangement order of each section in the target computation stage when the input sequence is not changed may be first determined, and then the combined matrix in the target computation stage is determined based on the rearrangement number.

When the decimation mode of the FFT computation is decimation in frequency, the determining a rearrangement number corresponding to each section included in the target computation stage includes: obtaining a third multidimensional array, where an order of dimensions at all levels of the third multidimensional array is opposite to an order of dimensions at all levels of a fourth multidimensional array, elements in the fourth multidimensional array are sequentially arranged from 0 and a length of the fourth multidimensional array is a quantity of sections included in the target computation stage, and the dimensions of the fourth multidimensional array are sequentially radixes respectively corresponding to computation stages after the target computation stage; and sequentially determining an element in the third multidimensional array as the rearrangement number corresponding to each section included in the target computation stage.

During implementation, the third multidimensional array Q3 may indicate the rearrangement number corresponding to each section included in the target computation stage. The third multidimensional array Q3 may be obtained by transposing the fourth multidimensional array Q4. In an example, the FFT computation includes m computation stages, the target computation stage is an n^{th} computation stage and includes r sections. In this case, Q4=[0, 1, 2, ..., r] is the fourth multidimensional array, and the dimensions at all levels corresponding to the fourth multidimensional array are sequentially Nₙ₊₁, Nₙ₊₂, ..., and Nₘ. Correspondingly, the third multidimensional array Q3 is obtained by transposing the fourth multidimensional array Q4, and the dimensions at all levels corresponding to the third multidimensional array are sequentially Nₘ, ..., Nₙ₊₁, and Nₙ₊₁. A value of a 1^{st} element in the third multidimensional array Q3 is a rearrangement number corresponding to a 1^{st} section in the current target computation stage.

Step R42: Determine, based on the rearrangement number of each section in the target computation stage, a merged matrix corresponding to the section.

After the rearrangement number corresponding to each section is determined, the rearrangement number of each section may be substituted into the following formulas, to obtain imaginary part data and real part data of each element in the merged matrix. $k = \left(Alp+Bpq\right) modN ;$ ${T}_{n}^{l} r \left[p, q\right] = cos \left(-2πk/N\right) ;$ and ${T}_{n}^{l} i \left[p, q\right] = sin \left(-2πk/N\right) .$

*l* represents the rearrangement number, *N* represents a length of a data sequence, *p* and *q* respectively represent a row number and a column number of an element in a merged matrix, ${T}_{n}^{l} r \left[p, q\right]$ represents real part data corresponding to an element in a *p* ^{th} row and a *q* ^{th} column in a merged matrix corresponding to an *l* ^{th} section in an *n* ^{th} computation stage, and ${T}_{n}^{l} i \left[p, q\right]$ represents imaginary part data corresponding to the element in the *p* ^{th} row and the *q* ^{th} column in the merged matrix corresponding to the *l* ^{th} section in the *n* ^{th} computation stage. *A* and *B* are preset coefficients, A is equal to a product of radixes corresponding to computation stages before the target computation stage, and B is equal to a ratio of the length N of the data sequence to a radix corresponding to the target computation stage.

After the real part data and the imaginary part data of each element in the merged matrix corresponding to the target computation stage are obtained, the real part data and the imaginary part data of each element may be used as the merged matrix for performing computation in the target computation stage. It should be noted that a quantity of merged matrixes in the target computation stage is the same as the quantity of sections. One merged matrix may correspond to a plurality of butterfly units of a same rotation factor, and the input data matrix multiplied by the merged matrix includes input data of the plurality of butterfly units.

Step R5: Sequentially execute the plurality of computation stages, to obtain a computation result of the FFT computation.

After the combined matrix corresponding to each section in the target computation stage is obtained, each computation stage included in the FFT computation may be sequentially executed. When the target computation stage is executed, input data of the target computation stage may be separately formed into an input data matrix that is multiplied by the combined matrix corresponding to each section, and a multiplication operation on the combined matrix and the input data matrix is implemented based on the matrix multiplication unit, to implement computation in the target computation stage. For example, in the target computation stage, the combined matrix corresponding to the *l* ^{th} section is ${T}_{n}^{l}$. During computation, a multiplication operation may be performed on ${T}_{n}^{l}$ and an input data matrix including input data of butterfly units in the *l* ^{th} section, to obtain a computation result corresponding to the *l* ^{th} section. In this way, when the target computation stage is executed in this embodiment of this application, the computation in the target computation stage can be implemented only by performing the multiplication operation on the combined matrix and the input data matrix, so that efficiency of executing the target computation stage can be improved, thereby improving the efficiency of the FFT computation.

In a possible implementation, because a same rotation factor does not exist in the 1^{st} computation stage, and rotation factors of the last computation stage are 1, the target computation stage may be a computation stage between the 1^{st} computation stage and the last computation stage in the plurality of computation stages. A conventional computation manner may be used for computation in the 1^{st} computation stage and computation in the last computation stage, and details are not described in this application. In addition, this embodiment of this application further provides a method for determining, based on a trigonometric function with a periodicity of N, a rotation factor matrix corresponding to a 1^{st} computation stage, and a method for determining a DFT system matrix in a 1^{st} computation stage and a DFT system matrix in a last computation stage. The methods are as follows:
For the rotation factor matrix of the 1^{st} computation stage, a rearrangement number corresponding to each section in the 1^{st} computation stage may be obtained. For a manner of obtaining the rearrangement number corresponding to each section in the 1^{st} computation stage, refer to step R41. Details are not described herein again. After the rearrangement number corresponding to each section corresponding to the 1^{st} computation stage is obtained, real part data and imaginary part data corresponding to each element in the rotation factor matrix may be determined by using the following calculation formulas: $k = lj mod N ;$ ${R}_{1 -} r \left[i, j\right] = cos \left(-\frac{2 πk}{N}\right) , and {R}_{1 -} i \left[i, j\right] = sin \left(-\frac{2 πk}{N}\right) ;$

*l* represents the rearrangement number, *N* represents a length of a data sequence, *i and j* respectively represent a row number and a column number of an element in a rotation factor matrix *R*₁, *R*₁*_r*[*i, j*] represents real part data corresponding to an element in an *i*^{th} row and a *j*^{th} column in the rotation factor matrix *R*₁, and *R*₁_*i*[*i*, *j*] represents imaginary part data corresponding to the element in the *i*^{th} row and the *j*^{th} column in the rotation factor matrix*R*₁. *i* ∈ [0, *N*₂*N*₃ ... *Nₘ*), *j* ∈ [0*, N*₁), *N*₁ represents a radix corresponding to the 1^{st} computation stage, and *N*₂*N*₃ ... *Nₘ* represents a product of radixes corresponding to computation stages after the 1^{st} computation stage.

For a DFT coefficient matrix in the 1^{st} computation stage, it is set that *i, j* ∈ [0, *N*₁), and computation is performed according to *k = Nij*/*N*₁ *mod N,* to respectively obtain real part data ${W}_{1 -} r \left[i, j\right] = cos \left(-\frac{2 πk}{N}\right)$ and imaginary part data ${W}_{1 -} i \left[i, j\right] = cos \left(-\frac{2 πk}{N}\right)$. *W*₁*_r*[*i, j*] represents real part data corresponding to an element in an *i*^{th} row and a *j*^{th} column in the DFT coefficient matrix *W*₁ in the 1^{st} computation stage, and *W*₁_*i*[*i, j*] represents imaginary part data corresponding to the element in the *i*^{th} row and the *j*^{th} column in the DFT coefficient matrix *W*₁ in the 1^{st} computation stage.

For a DFT coefficient matrix in the last computation stage, it is set that *i, j* ∈ [0, *Nₘ*), and computation is performed according to *k* = *Nij*/*Nₘ mod N*, to respectively obtain real part data *Wₘ*_*r*[*i, j*] = *C*[*k*] and imaginary part data *Wₘ_i*[*i, j*] = *S*[*k*]. *Wₘ_r*[*i, j*] represents real part data corresponding to an element in an *i*^{th} row and a *j*^{th} column in the DFT coefficient matrix *Wₘ* in the last computation stage, and *Wₘ*_*r*[*i, j*] represents imaginary part data corresponding to the element in the *i*^{th} row and the *j*^{th} column in the DFT coefficient matrix *Wₘ* in the last computation stage.

**Solution 2: Perform FFT computation based on decimation in time.**

Step S1: Obtain a data sequence on which the FFT computation is to be performed.

Step S2: Divide the FFT computation into a plurality of computation stages based on a length of the data sequence.

Processing in step S1 and processing in step S2 are the same as processing in step R1 and processing in step R2, and details are not described herein again.

Step S3: Determine the data sequence on which the FFT computation is performed as an input sequence of a 1^{st} computation stage in the FFT computation.

In a conventional FFT computation process implemented based on decimation in time, the input sequence of the 1^{st} computation stage in the FFT computation is obtained by rearranging the data sequence on which the FFT computation is performed, where a result obtained through rearrangement is the same as a result obtained through rearrangement in step R3. However, in the conventional FFT computation process implemented based on decimation in time, elements corresponding to a same rotation factor are not continuously arranged in an input sequence of a computation stage. In this way, in a process of loading the input sequence to a vector register or a matrix register in a form of an input data matrix, discontinuous reading needs to be performed on the input sequence.

To avoid a problem of discontinuous reading, compared with the conventional FFT computation process implemented based on decimation in time, in this embodiment of this application, the data sequence on which the FFT computation is performed is determined as the input sequence of the 1^{st} computation stage, and rearrangement processing is not performed on the data sequence on which the FFT computation is performed. In this way, when an output sequence corresponding to each computation stage is used as an input sequence corresponding to a next computation stage, elements corresponding to a same rotation factor of the next computation stage may be continuously arranged in the input sequence.

Taking 8-point FFT computation and the 8-point FFT computation including three computation stages as an example, N=[0, 1, 2, 3, 4, 5, 6, 7] is the input sequence of the 1^{st} computation stage before the rearrangement, and N=[0, 4, 2, 6, 1, 5, 3, 7] is the input sequence of the 1^{st} computation stage after the rearrangement. As shown in FIG. 3, before the rearrangement, elements corresponding to a rotation factor W2/8 in a 2^{nd} computation stage are respectively located at a 4^{th} position and an 8^{th} position of an input sequence; and after the rearrangement, the elements corresponding to the rotation factor W2/8 in the 2^{nd} computation stage are respectively located at a 7^{th} position and the 8^{th} position of the input sequence.

It can be learned that, in this embodiment of this application, after the input sequence of the 1^{st} computation stage is changed, elements corresponding to a same rotation factor in an input sequence of each computation stage are continuously arranged. In this way, in this embodiment of this application, the elements corresponding to the same rotation factor in the input sequence may be read, and are stored in the vector register or the matrix register as each row of the input data matrix, so that discontinuous reading on the input sequence can be avoided, thereby improving the efficiency of the FFT computation.

Step S4: Determine a combined matrix corresponding to a target computation stage in the plurality of computation stages.

Same as step R4, in Solution 2, an embodiment of this application also provides a method for determining a combined matrix based on a trigonometric function with a periodicity of N, including:
Step S41: Determine a rearrangement number corresponding to each section included in the target computation stage, where the rearrangement number indicates an arrangement order of each section in the target computation stage when the input sequence of the 1^{st} computation stage is not changed.

Because the input sequence of the 1^{st} computation stage is rearranged in step S2, an order of sections in each computation stage is different from an order of sections in each computation stage in the conventional FFT computation. Therefore, in this embodiment of this application, the arrangement order of each section in the target computation stage when the input sequence is not changed may be first determined, and then the combined matrix in the target computation stage is determined based on the rearrangement number.

When the decimation mode of the FFT computation is decimation in time, the determining a rearrangement number corresponding to each section included in the target computation stage includes: obtaining a fifth multidimensional array, where an order of dimensions at all levels of the fifth multidimensional array is opposite to an order of dimensions at all levels of a sixth multidimensional array, elements in the sixth multidimensional array are sequentially arranged from 0 and a length of the sixth multidimensional array is a quantity of sections included in the target computation stage, and the dimensions of the sixth multidimensional array are sequentially radixes respectively corresponding to computation stages before the target computation stage; and sequentially determining an element in the fifth multidimensional array as the rearrangement number corresponding to each section included in the target computation stage.

During implementation, the fifth multidimensional array Q5 may indicate the rearrangement number corresponding to each section included in the target computation stage. The fifth multidimensional array Q5 may be obtained by transposing the sixth multidimensional array Q6. In an example, the FFT computation includes m computation stages, the target computation stage is an n^{th} computation stage and includes r sections. In this case, Q6=[0, 1, 2, ..., r] is the sixth multidimensional array, and the dimensions at all levels corresponding to the fourth multidimensional array are sequentially N₁, N₂, ..., and Nₙ₋₁. Correspondingly, the fifth multidimensional array Q5 is obtained by transposing the sixth multidimensional array Q6, and the dimensions at all levels corresponding to the third multidimensional array are sequentially Nₙ₋₁, N₂, ..., and N₁. N₁, N₂, ..., and Nₙ₋₁ are radixes respectively corresponding to the first (n-1) computation stages. An element sequentially arranged in the fifth multidimensional array Q5 is the rearrangement number corresponding to each section in the target computation stage. For example, a value of a 1^{st} element in the fifth multidimensional array Q5 is a rearrangement number corresponding to a 1^{st} section in the current target computation stage, and a value of a 2^{nd} element in the fifth multidimensional array Q5 is a rearrangement number corresponding to a 2^{nd} section in the current target computation stage.

Step S42: Determine, based on the rearrangement number of each section in the target computation stage, a merged matrix corresponding to the section.

Processing in step S42 is the same as processing in step R42, and details are not described herein again.

Step S5: Sequentially execute the plurality of computation stages, to obtain a computation result of the FFT computation.

After the combined matrix corresponding to each section in the target computation stage is obtained, each computation stage included in the FFT computation may be sequentially executed. When the target computation stage is executed, input data of the target computation stage may be separately formed into an input data matrix that is multiplied by the combined matrix corresponding to each section, and a multiplication operation on the combined matrix and the input data matrix is implemented based on the matrix multiplication unit, to implement computation in the target computation stage. For example, in the target computation stage, a combined matrix corresponding to the *l* ^{th} section is ${T}_{n}^{l}$. During computation, a multiplication operation may be performed on ${T}_{n}^{l}$ and an input data matrix including input data of butterfly units in the *l* ^{th} section, to obtain a computation result corresponding to the *l* ^{th} section. In this way, when the target computation stage is executed in this embodiment of this application, the computation in the target computation stage can be implemented only by performing the multiplication operation on the combined matrix and the input data matrix, so that efficiency of executing the target computation stage can be improved, thereby improving the efficiency of the FFT computation.

In a possible implementation, similar to Solution 1, all rotation factors of the 1^{st} computation stage are 1, and a same rotation factor does not exist in the last computation stage, the target computation stage may be a computation stage between the 1^{st} computation stage and the last computation stage. This embodiment of this application further provides a method for determining, based on a trigonometric function with a periodicity of N, a DFT system matrix in a last computation stage. The method is as follows:
For the rotation factor matrix of the last computation stage, a rearrangement number corresponding to each section in the last computation stage may be obtained. For a manner of obtaining the rearrangement number corresponding to each section in the last computation stage, refer to step S41. Details are not described herein again. After the rearrangement number corresponding to each section corresponding to the last computation stage is obtained, real part data and imaginary part data corresponding to each element in the rotation factor matrix may be determined by using the following calculation formulas: $k = lj mod N ;$ ${R}_{m -} r \left[i, j\right] = cos \left(-\frac{2 πk}{N}\right) , and {R}_{m -} i \left[i, j\right] = sin \left(-\frac{2 πk}{N}\right) ;$

*l* represents the rearrangement number, *N* represents a length of a data sequence, *i and j* respectively represent a row number and a column number of an element in a rotation factor matrix *Rₘ*, *Rₘ_r*[*i, j*] represents real part data corresponding to an element in an *i*^{th} row and a *j*^{th} column in the rotation factor matrix *Rₘ*, and *Rₘ_i*[*i, j*] represents imaginary part data corresponding to the element in the *i*^{th} row and the *j*^{th} column in the rotation factor matrix *Rₘ*. *i* ∈ [0, *N*₁*N*₂ ... *N*_{*m*-1}), *j* ∈ [0, *Nₘ*), *Nₘ* represents a radix corresponding to the last computation stage, and *N*₁*N*₂ ... *N*_{*m-*1} represents a product of radixes corresponding to computation stages after the last computation stage.

For a DFT coefficient matrix at the 1^{st} computation stage and the DFT coefficient matrix at the last computation stage, refer to the computation mode in Solution 1, and details are not described herein again.

**Solution 3: Perform FFT computation in another mode based on decimation in time.**

Step T1: Obtain a data sequence on which the FFT computation is to be performed.

Step T2: Divide the FFT computation into a plurality of computation stages based on a length of the data sequence.

Step T3: Determine the data sequence on which the FFT computation is performed as an input sequence of a 1^{st} computation stage in the FFT computation.

Processing in step T1 to processing in step T3 are the same as processing in step R1 to processing in step R3, and details are not described herein again. A difference between Solution 2 and Solution 3 lies in that, in Solution 2, the output sequence of the last computation stage in the FFT computation is rearranged to obtain the computation result of the FFT computation; and in Solution 3, an output sequence of each computation stage after the 2^{nd} computation stage in the FFT computation is rearranged to obtain a computation result of the FFT computation.

Step T4: Determine a combined matrix corresponding to a target computation stage in the plurality of computation stages.

Same as step R4 and step S4, in Solution 3, an embodiment of this application also provides a method for determining a combined matrix based on a trigonometric function with a periodicity of N, including:
Step T41: Determine a rearrangement number corresponding to each section included in the target computation stage, where the rearrangement number indicates an arrangement order of each section in the target computation stage when the input sequence of the 1^{st} computation stage is not changed.

Because the output sequence of each computation stage after each 2^{nd} computation stage may be rearranged in Solution 3, an order of sections in each computation stage is different from an order of sections in each computation stage in the conventional FFT computation. Therefore, in this embodiment of this application, the arrangement order of each section in the target computation stage when the output sequence is not rearranged may be first determined, and then the combined matrix in the target computation stage is determined based on the rearrangement number. For rearrangement processing on the output sequence of each computation stage after the 2^{nd} computation stage, refer to step T5, and details are not described herein.

In Solution 3, the determining a rearrangement number corresponding to each section included in the target computation stage includes: obtaining a first sequence matrix, where the first sequence matrix is a transposed matrix of a second sequence matrix, second sequence matrices are sequentially arranged from 0 in row-major order, a quantity of columns of the second sequence matrix is equal to a radix of a previous computation stage of the target computation stage, and a quantity of rows of the second sequence matrix is equal to a product of radixes respectively corresponding to computation stages before the previous computation stage; and sequentially determining an element in the first sequence matrix as the rearrangement number corresponding to each section included in the target computation stage.

During implementation, a first sequence matrix P1 may indicate the rearrangement number corresponding to each section included in the target computation stage. The first sequence matrix P1 may be obtained by transposing a second sequence matrix P2. In an example, the FFT computation includes m computation stages, corresponding dimensions at all levels are sequentially N₁, N₂, ..., and Nₘ, the target computation stage is an n^{th} computation stage and includes r sections, elements in the second sequence matrix P2 may be arranged as [0, 1, 2, ..., r] in row-major order, the quantity of columns of the second sequence matrix is equal to Nₙ₋₁, and the quantity of rows is equal to N₁*N₂*...*Nₙ₋₂. Correspondingly, the first sequence matrix P1 is obtained by transposing the second sequence matrix P2, a quantity of rows of the first sequence matrix P1 is equal to Nₙ₋₁, and a quantity of columns is equal to N₁*N₂*...* Nₙ₋₂. Each element arranged by row in the first sequence matrix P1 is the rearrangement number corresponding to each section included in the target computation stage. The first sequence matrix and the second sequence matrix may also be multidimensional arrays. Dimensions at all levels before a last level of the multidimensional array corresponding to the second sequence matrix are the radixes respectively corresponding to the computation stages before the previous computation stage. A dimension at the last level of the multidimensional array corresponding to the second sequence matrix is the radix corresponding to the previous computation stage, that is, dimensions at all levels of the multidimensional array corresponding to the second sequence matrix are sequentially *N*₁, *N*₂, ... , *N*_{*n*-2}, *and N*_{*n-*1}. Correspondingly, dimensions at all levels of the multidimensional array corresponding to the first sequence matrix are sequentially *N*_{*n*-1}, *N*₁, *N*₂,... , *and N*_{*n*-2}.

Step T42: Determine, based on the rearrangement number of each section in the target computation stage, a merged matrix corresponding to the section.

Processing in step T42 is the same as processing in step R42, and details are not described herein again.

Step T5: Sequentially execute the plurality of computation stages, to obtain a computation result of the FFT computation.

After the combined matrix corresponding to each section in the target computation stage is obtained, each computation stage included in the FFT computation may be sequentially executed. When the target computation stage is executed, input data of the target computation stage may be separately formed into an input data matrix that is multiplied by the combined matrix corresponding to each section, and a multiplication operation on the combined matrix and the input data matrix is implemented based on the matrix multiplication unit, to implement computation in the target computation stage.

In Solution 3, for each computation stage after the 2^{nd} computation stage in the plurality of computation stages, a computation result corresponding to each computation stage may be stored for each computation stage based on a set storage order. The computation result corresponding to each section is a short output sequence, and a computation result corresponding to each section included in a computation stage may form an output sequence corresponding to the computation stage. The following describes each computation stage after the 2^{nd} computation stage based on a corresponding storage order.

A seventh multidimensional array may be obtained for each computation stage between a 2^{nd} computation stage and a second-to-last computation stage in the plurality of computation stages, where an order of dimensions after a dimension at a 1^{st} level of the seventh multidimensional array is the same as an order of dimensions before a dimension at a last level of an eighth multidimensional array, the dimension at the 1^{st} level of the seventh multidimensional array is equal to the dimension at the last level of the eighth multidimensional array, elements in the eighth multidimensional array are sequentially arranged from 0 and a length of the eighth multidimensional array is a quantity of sections included in the computation stage, the dimension at the last level is a radix corresponding to a previous computation stage of the computation stage, and the dimensions before the dimension at the last level are sequentially radixes respectively corresponding to computation stages before the previous computation stage; and the seventh multidimensional array is determined as a storage order of sections in the computation stage.

During implementation, the seventh multidimensional array Q7 may indicate the storage order of the sections in the computation stage. The seventh multidimensional array Q7 may be obtained by transposing the eighth multidimensional array Q8. Elements in the eighth multidimensional array Q8 are sequentially arranged from 0, and a length corresponding to the elements is a quantity of sections included in a computation stage. For example, the computation stage is an n^{th} computation stage in the FFT computation and includes m sections, where the n^{th} computation stage is between the 2^{nd} computation stage and the second-to-last computation stage. Correspondingly, the elements in the eighth multidimensional array Q8 may be arranged from 0 to m, and dimensions at all levels corresponding to the eighth multidimensional array are respectively Nₙ₋₂, Nₙ₋₃, ..., N₁, and Nₙ₋₁, where N₁, ..., Nₙ₋₃, Nₙ₋₂, and Nₙ₋₁ are sequentially radixes of (n-1) computation stages before the n^{th} computation stage.

After the eighth multidimensional array Q8 is determined, the eighth multidimensional array Q8 may be transposed, to obtain the seventh multidimensional array Q7. For example, the eighth multidimensional array Q8 is transposed to the seventh multidimensional array Q7, and dimensions at all levels of the seventh multidimensional array Q7 are sequentially Nₙ₋₁, Nₙ₋₂, ..., and N₁. After the seventh multidimensional array Q7 is obtained, a storage order corresponding to a computation result of each section in a computation stage may be indicated based on a value of each element in the seventh multidimensional array Q7. For example, if the elements in the seventh multidimensional array Q7 are sequentially 0, 3, 1, 4, 2, and 5, it may indicate that in a corresponding computation stage, a computation result of a 1^{st} section is first stored, a computation result of a 3^{rd} section is arranged after the computation result of the 1^{st} section, a computation result of a 5^{th} section is arranged after the computation result of the 3^{rd} section, the computation result of a 2^{nd} section is arranged after the computation result of the 5^{th} section, a computation result of a 4^{th} section is arranged after the computation result of the 2^{nd} section, and a computation result of a 6^{th} section is arranged after the computation result of the 4^{th} section.

For the second-to-last computation stage, a storage order of computation results corresponding to each section in the second-to-last computation stage may be the same as a storage order corresponding to computation stages between the 2^{nd} computation stage and the second-to-last computation stage. A difference lies in that, in the second-to-last computation stage, computation results corresponding to a same section are stored at an interval of X elements, and a value of X is equal to a quantity of sections included in the second-to-last computation stage. In addition, in the second-to-last computation stage, in computation results corresponding to a plurality of sections, elements at a same location are stored based on a corresponding computation sequence.

For the last computation stage, after computation in the last computation stage is completed, Y elements may be sequentially read, where a value of Y is equal to a product of radixes corresponding to computation stages before the second-to-last computation stage. Then, elements read each time are stored based on a storage order indicated by a third sequence matrix. The third sequence matrix is a transposed matrix of a fourth sequence matrix, fourth sequence matrices are sequentially arranged from 0 in row-major order, a quantity of columns of the fourth sequence matrix is equal to a radix corresponding to the last computation stage, and a quantity of rows of the fourth sequence matrix is equal to a radix corresponding to the second-to-last computation stage.

After the computation result of each section included in each computation stage is stored in the foregoing storage manner, the computation result of the FFT computation performed on the data sequence may be obtained. In this way, when the target computation stage is executed in this embodiment of this application, the computation in the target computation stage can be implemented only by performing the multiplication operation on the combined matrix and the input data matrix, so that efficiency of executing the target computation stage can be improved, thereby improving the efficiency of the FFT computation.

In a possible implementation, similar to Solution 2, all rotation factors of the 1^{st} computation stage are 1, and a same rotation factor does not exist in the last computation stage, the target computation stage may be a computation stage between the 1^{st} computation stage and the last computation stage. This embodiment of this application further provides a method for determining, based on a trigonometric function with a periodicity of N, a DFT system matrix in a last computation stage. The method is as follows:
For a rotation factor matrix in the last computation stage, it may be set that *i* ∈ [0, *Nₘ*) and *j* ∈ [0*, N*₁*N*₂ ... *N*_{*m-*1}), and computation is performed according to *k* = *ij mod N,* to respectively obtain real part data ${R}_{m -} r \left[i, j\right] = cos \left(-\frac{2 πk}{N}\right)$ and imaginary part data ${R}_{m -} i \left[i, j\right] = sin \left(-\frac{2 πk}{N}\right)$. *N* represents a length of a data sequence, *i and j* respectively represent a row number and a column number of an element in a rotation factor matrix *Rₘ*, *Rₘ_r*[*i, j*] represents real part data corresponding to an element in an *i*^{th} row and a *j*^{th} column in the rotation factor matrix *Rₘ*, and *Rₘ_i*[*i, j*] represents imaginary part data corresponding to the element in the *i*^{th} row and the *j*^{th} column in the rotation factor matrix *Rₘ*. *Nₘ* represents the radix corresponding to the last computation stage, and *N*₁*N*₂ *... N*_{*m-*1} represents a product of radixes corresponding to computation stages after the last computation stage. In addition, after the rotation factor matrix *Rₘ* in the last computation stage is obtained based on the method for performing computation provided in this application, reshape processing further needs to be performed on *Rₘ*, including reshaping (reshaping) *Rₘ* as a multidimensional array whose dimensions are sequentially *Nₘ*, *N*_{*m-*1}, *N*_{*m-*2}, ..., *and N*₁, exchanging coordinate axes to convert the multidimensional array into a multidimensional array whose dimensions are sequentially *N*_{*m-*1}, *Nₘ*, *N*_{*m*-2}, ..., *and N*₁, and then reshaping the obtained multidimensional array as a two-dimensional array whose dimensions are sequentially *N*_{*m-*1}, *Nₘ*, *N*_{*m-*2}, ..., *and N*₁*.* The two-dimensional data is the rotation factor matrix in the last computation stage.

For a DFT coefficient matrix at the 1^{st} computation stage and the DFT coefficient matrix at the last computation stage, refer to the computation mode in Solution 1, and details are not described herein again.

An embodiment of this application further provides a matrix operation method. The method may be applied to the matrix multiplication operation on the input data matrix and the combined matrix in the foregoing embodiment. The method is as follows: arranging all odd-indexed rows in the merged matrix after all even-indexed rows, or arranging all even-indexed rows in the merged matrix after all odd-indexed rows, to obtain a rearranged merged matrix; and determining a product of the input sequence of the target computation stage and the rearranged merged matrix as the output sequence of the target computation stage.

During the matrix multiplication operation, the input data matrix includes alternately arranging real part data and imaginary part data of a complex number by row. In each row and each column of the combined matrix, both the real part data of the complex number and the imaginary part data of the complex number are included, and the real part data and the imaginary part data in each row and each column are alternately arranged. In a result matrix obtained by performing the matrix multiplication operation on the input data matrix and the combined matrix, real part data of a complex number and imaginary part data of a complex number are also alternately arranged by row. In this way, when the result matrix is reshaped as an input sequence of a next computation stage, real part data in each row of the result matrix needs to be read at an interval, and imaginary part data in each row of the result matrix needs to be read at an interval, causing discontinuous reading and reducing efficiency of FFT computation.

In the matrix operation method provided in this embodiment of this application, the odd-indexed rows in the merged matrix may be arranged after the even-indexed rows, or the odd-indexed rows in the merged matrix may be arranged after the even-indexed rows, so that the rearranged merged matrix is obtained. In this way, in a result matrix obtained by performing the matrix multiplication operation based on the rearranged merged matrix and the input data matrix, the real part data of the complex number is continuously arranged by row, and the imaginary part data of the complex number is continuously arranged by row. In this way, when the result matrix is reshaped as an input sequence of a next computation stage, there is no need to real part data in each row and imaginary part data in each row of the result matrix at an interval, so that discontinuous reading is further avoided, and the efficiency of the FFT computation can be improved.

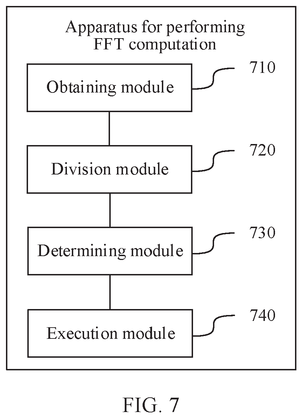

FIG. 7 shows an apparatus for performing FFT computation according to an embodiment of this application. The apparatus may be the processor in the foregoing embodiments. The apparatus includes:
An obtaining module 710 is configured to obtain, in response to a fast Fourier transform FFT computation request, a data sequence on which FFT computation is to be performed; and may be specifically configured to implement an obtaining function of step 501 and an implicit step.

A division module 720 is configured to divide the FFT computation into a plurality of computation stages based on a length of the data sequence; and may be specifically configured to implement a division function of step 502 and an implicit step.

A determining module 730 is configured to: for at least one target computation stage in the plurality of computation stages, determine, based on radixes respectively corresponding to the plurality of computation stages and an execution order of the target computation stage in the plurality of computation stages, a merged matrix corresponding to the target computation stage, where the merged matrix is a product of a discrete Fourier transform DFT coefficient matrix and a rotation factor in the target computation stage; and may be specifically configured to implement a determining function of step 503 and an implicit step.

An execution module 740 is configured to sequentially execute the plurality of computation stages, and during execution of the target computation stage, determine a product of an input sequence of the target computation stage and the merged matrix as an output sequence of the target computation stage; and may be specifically configured to implement an execution function of step 504 and an implicit step.

The determining module 720 is configured to determine, based on an output sequence of a last computation stage in the plurality of computation stages, a computation result of the FFT computation performed on the data sequence; and may be specifically configured to implement a determining function of step 505 and an implicit step.

In a possible implementation, when a decimation mode corresponding to the FFT computation is decimation in time, an input sequence of a 1^{st} computation stage in the plurality of computation stages is changed to the data sequence; or
when a decimation mode corresponding to the FFT computation is decimation in frequency, an input sequence of a 1^{st} computation stage is changed to a sequence obtained by performing rearrangement processing on the data sequence, where the rearrangement processing is to determine the data sequence as a first multidimensional array whose dimensions at all levels are sequentially the radixes corresponding to the plurality of computation stages, and transpose the first multidimensional array to obtain a second multidimensional array, where an order of dimensions at all levels corresponding to the second multidimensional array is opposite to an order of the dimensions at all levels corresponding to the first multidimensional array.

In a possible implementation, the determining module is configured to:
determine a rearrangement number corresponding to each section included in the target computation stage, where the rearrangement number indicates an arrangement order of each section in the target computation stage when the input sequence of the 1^{st} computation stage is not changed; and
determine, based on the rearrangement number of each section in the target computation stage, a merged matrix corresponding to the section.

In a possible implementation, when the decimation mode of the FFT computation is decimation in frequency, the determining module is configured to:
obtain a third multidimensional array, where an order of dimensions at all levels of the third multidimensional array is opposite to an order of dimensions at all levels of a fourth multidimensional array, elements in the fourth multidimensional array are sequentially arranged from 0 and a length of the fourth multidimensional array is a quantity of sections included in the target computation stage, and the dimensions of the fourth multidimensional array are sequentially radixes respectively corresponding to computation stages after the target computation stage; and
sequentially determine an element in the third multidimensional array as the rearrangement number corresponding to each section included in the target computation stage.

In a possible implementation, when the decimation mode of the FFT computation is decimation in time, the determining module is configured to:
obtain a fifth multidimensional array, where an order of dimensions at all levels of the fifth multidimensional array is opposite to an order of dimensions at all levels of a sixth multidimensional array, elements in the sixth multidimensional array are sequentially arranged from 0 and a length of the sixth multidimensional array is a quantity of sections included in the target computation stage, and the dimensions of the sixth multidimensional array are sequentially radixes respectively corresponding to computation stages before the target computation stage; and
sequentially determine an element in the fifth multidimensional array as the rearrangement number corresponding to each section included in the target computation stage.

In a possible implementation, when the decimation mode of the FFT computation is decimation in time, the determining module is configured to:
obtain a first sequence matrix, where the first sequence matrix is a transposed matrix of a second sequence matrix, the second sequence matrices are sequentially arranged from 0 in row-major order, a quantity of columns of the second sequence matrix is equal to a radix of a previous computation stage of the target computation stage, and a quantity of rows of the second sequence matrix is equal to a product of radixes respectively corresponding to computation stages before the previous computation stage; and
sequentially determine an element in the first sequence matrix as the rearrangement number corresponding to each section included in the target computation stage.

In a possible implementation, the apparatus further includes a storage module, configured to:
obtain a seventh multidimensional array for each computation stage between a 2^{nd} computation stage and a second-to-last computation stage in the plurality of computation stages, where an order of dimensions after a dimension at a 1^{st} level of the seventh multidimensional array is the same as an order of dimensions before a dimension at a last level of an eighth multidimensional array, the dimension at the 1^{st} level of the seventh multidimensional array is equal to the dimension at the last level of the eighth multidimensional array, elements in the eighth multidimensional array are sequentially arranged from 0 and a length of the eighth multidimensional array is a quantity of sections included in the computation stage, the dimension at the last level is a radix corresponding to a previous computation stage of the computation stage, and the dimensions before the dimension at the last level are sequentially radixes respectively corresponding to computation stages before the previous computation stage;
determine the seventh multidimensional array as a storage order of sections in each computation stage; and
store computation results for the sections in each computation stage based on the storage order.

In a possible implementation, the determining module is configured to:
determine, based on the rearrangement number of each section in the target computation stage and location information of each element in the merged matrix, imaginary part data and real part data of each element in the merged matrix corresponding to each section, where the rearrangement number, the location information, and the imaginary part data and real part data of each element satisfy the following formulas: $k = \left(Alp+Bpq\right) modN ;$ ${T}_{n}^{l} r \left[p, q\right] = cos \left(-2πk/N\right) ;$ and ${T}_{n}^{l} i \left[p, q\right] = sin \left(-2πk/N\right) .$

*l* represents the rearrangement number, *A* and *B* represent preset coefficients, *N* represents a length of a data sequence, *p* and *q* respectively represent a row number and a column number of an element in a merged matrix, ${T}_{n}^{l} r \left[p, q\right]$ represents real part data corresponding to an element in a *p* ^{th} row and a *q* ^{th} column in a merged matrix corresponding to an *l* ^{th} section in an *n* ^{th} computation stage, and ${T}_{n}^{l} i \left[p, q\right]$ represents imaginary part data corresponding to the element in the *p* ^{th} row and the *q* ^{th} column in the merged matrix corresponding to the *l* ^{th} section in the *n* ^{th} computation stage.

In a possible implementation, the determining module is configured to:
arrange all odd-indexed rows in the merged matrix after all even-indexed rows, or arrange all even-indexed rows in the merged matrix after all odd-indexed rows, to obtain a rearranged merged matrix; and
determine a product of the input sequence of the target computation stage and the rearranged merged matrix as the output sequence of the target computation stage.

In a possible implementation, the division module is configured to:
divide the FFT computation into the plurality of computation stages based on the length of the data sequence and priorities corresponding to a plurality of candidate radixes, and determine a radix corresponding to each computation stage, where the candidate radix is less than or equal to half of a computation size of a matrix multiplication unit for performing the FFT computation, and a priority of the candidate radix is in direct proportion to a value of the candidate radix.

In a possible implementation, the at least one target computation stage is a computation stage other than the 1^{st} computation stage and the last computation stage in the plurality of computation stages.

Division into the modules in this embodiment of this application is an example, and is merely logical function division. During actual implementation, another division manner may be used. In addition, the functional modules in embodiments of this application may be integrated in one processor, or may exist as physically independent. Alternatively, two or more modules may be integrated into one module. The integrated module may be implemented in a form of hardware, or may be implemented in a form of a software functional module. In addition, the apparatus for performing FFT computation provided in the foregoing embodiment and the embodiment of the method for performing FFT computation belong to a same idea. For a specific implementation process, refer to the method embodiment, and details are not described herein again.

If the integrated module is implemented in a form of a software functional module and is sold or used as an independent product, the integrated module may be stored in a computer-readable storage medium. Based on such an understanding, the technical solutions of this application essentially, or the part contributing to the conventional technology, or all or a part of the technical solutions may be embodied in a form of a software product. The computer software product is stored in a storage medium, and includes several instructions for instructing a terminal device (which may be a personal computer, a mobile phone, a network device, or the like) or a processor (processor) to perform all or some steps of the method in embodiments of this application. The foregoing storage medium includes any medium that can store program code, such as a USB flash drive, a removable hard disk, a read-only memory (read-only memory, ROM), a random access memory (random access memory, RAM), a magnetic disk, or an optical disc.

An embodiment of this application further provides a computer program product including instructions. The computer program product may be software or a program product that includes instructions and that can run on a power consumption management device or be stored in any usable medium. When the computer program product is run on the power consumption management device, the at least one computing device is enabled to perform the method for performing FFT computation provided in embodiments of this application.

Embodiments of this application further provide a computer-readable storage medium. The computer-readable storage medium may be any usable medium that can be stored by a computing device, or a data storage device, for example, a data center, including one or more usable media. The usable medium may be a magnetic medium (for example, a floppy disk, a hard disk drive, or a magnetic tape), an optical medium (for example, a DVD), a semiconductor medium (for example, a solid-state drive), or the like. The computer-readable storage medium includes instructions. The instructions instruct the computing device to perform the method for performing FFT computation provided in embodiments of this application.

In this application, terms such as "first" and "second" are used to distinguish between same items or similar items that have basically same effects and functions. It should be understood that there is no logical or time sequence dependency between "first" and "second", and a quantity and an execution order are not limited. It should also be understood that although the following descriptions use terms such as "first" and "second" to describe various elements, these elements should not be limited by the terms. These terms are simply used to distinguish one element from another. For example, without departing from the scope of the various examples, a first multidimensional array may be referred to as a second multidimensional array, and similarly, the second multidimensional array may be referred to as a first multidimensional array. Both the first multidimensional array and the multidimensional array may be collectively referred to as multidimensional arrays, and the multidimensional arrays may be separate and different multidimensional arrays in some cases.

The term "at least one" in this application means one or more, and a term "a plurality of" in this application means two or more.

The foregoing descriptions are merely specific implementations of this application, but are not intended to limit the protection scope of this application. Any equivalent modification or replacement readily figured out by a person skilled in the art within the technical scope disclosed in this application shall fall within the protection scope of this application. Therefore, the protection scope of this application shall be subject to the protection scope of the claims.

## Claims

1. A method for performing FFT computation, wherein the method comprises:
obtaining, in response to a fast Fourier transform FFT computation request, a data sequence on which FFT computation is to be performed;
dividing the FFT computation into a plurality of computation stages based on a length of the data sequence;
for at least one target computation stage in the plurality of computation stages, determining, based on radixes respectively corresponding to the plurality of computation stages and an execution order of the target computation stage in the plurality of computation stages, a merged matrix corresponding to the target computation stage, wherein the merged matrix is a product of a discrete Fourier transform DFT coefficient matrix and a rotation factor in the target computation stage;
sequentially executing the plurality of computation stages, and during execution of the target computation stage, determining a product of an input sequence of the target computation stage and the merged matrix as an output sequence of the target computation stage; and
determining, based on an output sequence of a last computation stage in the plurality of computation stages, a computation result of the FFT computation performed on the data sequence.

2. The method according to claim 1, wherein when a decimation mode corresponding to the FFT computation is decimation in time, an input sequence of a 1^{st} computation stage in the plurality of computation stages is changed to the data sequence; or
when a decimation mode corresponding to the FFT computation is decimation in frequency, an input sequence of a 1^{st} computation stage is changed to a sequence obtained by performing rearrangement processing on the data sequence, wherein the rearrangement processing is to determine the data sequence as a first multidimensional array whose dimensions at all levels are sequentially the radixes corresponding to the plurality of computation stages, and transpose the first multidimensional array to obtain a second multidimensional array, wherein an order of dimensions at all levels corresponding to the second multidimensional array is opposite to an order of the dimensions at all levels corresponding to the first multidimensional array.

3. The method according to claim 2, wherein the determining, based on radixes respectively corresponding to the plurality of computation stages and an execution order of the target computation stage in the plurality of computation stages, a merged matrix corresponding to the target computation stage comprises:
determining a rearrangement number corresponding to each section comprised in the target computation stage, wherein the rearrangement number indicates an arrangement order of each section in the target computation stage when the input sequence of the 1^{st} computation stage is not changed; and
determining, based on the rearrangement number of each section in the target computation stage, a merged matrix corresponding to the section.

4. The method according to claim 3, wherein when the decimation mode of the FFT computation is decimation in frequency, the determining a rearrangement number corresponding to each section comprised in the target computation stage comprises:
obtaining a third multidimensional array, wherein an order of dimensions at all levels of the third multidimensional array is opposite to an order of dimensions at all levels of a fourth multidimensional array, elements in the fourth multidimensional array are sequentially arranged from 0 and a length of the fourth multidimensional array is a quantity of sections comprised in the target computation stage, and the dimensions of the fourth multidimensional array are sequentially radixes respectively corresponding to computation stages after the target computation stage; and
sequentially determining an element in the third multidimensional array as the rearrangement number corresponding to each section comprised in the target computation stage.

5. The method according to claim 3, wherein when the decimation mode of the FFT computation is decimation in time, the determining a rearrangement number corresponding to each section comprised in the target computation stage comprises:
obtaining a fifth multidimensional array, wherein an order of dimensions at all levels of the fifth multidimensional array is opposite to an order of dimensions at all levels of a sixth multidimensional array, elements in the sixth multidimensional array are sequentially arranged from 0 and a length of the sixth multidimensional array is a quantity of sections comprised in the target computation stage, and the dimensions of the sixth multidimensional array are sequentially radixes respectively corresponding to computation stages before the target computation stage; and
sequentially determining an element in the fifth multidimensional array as the rearrangement number corresponding to each section comprised in the target computation stage.

6. The method according to claim 3, wherein when the decimation mode of the FFT computation is decimation in time, the determining a rearrangement number corresponding to each section comprised in the target computation stage comprises:
obtaining a first sequence matrix, wherein the first sequence matrix is a transposed matrix of a second sequence matrix, second sequence matrices are sequentially arranged from 0 in row-major order, a quantity of columns of the second sequence matrix is equal to a radix of a previous computation stage of the target computation stage, and a quantity of rows of the second sequence matrix is equal to a product of radixes respectively corresponding to computation stages before the previous computation stage; and
sequentially determining an element in the first sequence matrix as the rearrangement number corresponding to each section comprised in the target computation stage.

7. The method according to claim 6, wherein the method further comprises:
obtaining a seventh multidimensional array for each computation stage between a 2^{nd} computation stage and a second-to-last computation stage in the plurality of computation stages, wherein an order of dimensions after a dimension at a 1^{st} level of the seventh multidimensional array is the same as an order of dimensions before a dimension at a last level of an eighth multidimensional array, the dimension at the 1^{st} level of the seventh multidimensional array is equal to the dimension at the last level of the eighth multidimensional array, elements in the eighth multidimensional array are sequentially arranged from 0 and a length of the eighth multidimensional array is a quantity of sections comprised in the computation stage, the dimension at the last level is a radix corresponding to a previous computation stage of the computation stage, and the dimensions before the dimension at the last level are sequentially radixes respectively corresponding to computation stages before the previous computation stage;
determining the seventh multidimensional array as a storage order of sections in each computation stage; and
storing computation results for the sections in each computation stage based on the storage order.

8. The method according to any one of claims 3 to 7, wherein the determining, based on the rearrangement number of each section in the target computation stage, a merged matrix corresponding to the section comprises:
determining, based on the rearrangement number of each section in the target computation stage and location information of each element in the merged matrix, imaginary part data and real part data of each element in the merged matrix corresponding to each section, wherein the rearrangement number, the location information, and the imaginary part data and real part data of each element satisfy the following formulas: $k = \left(Alp+Bpq\right) modN ;$ ${T}_{n}^{l} r \left[p, q\right] = cos \left(-2πk/N\right) ;$ and ${T}_{n}^{l} i \left[p, q\right] = sin \left(-2πk/N\right) ;$
wherein *l* represents the rearrangement number, *A* and *B* represent preset coefficients, *N* represents a length of a data sequence, *p* and *q* respectively represent a row number and a column number of an element in a merged matrix, ${T}_{n}^{l} r \left[p, q\right]$ represents real part data corresponding to an element in a *p* ^{th} row and a *q* ^{th} column in a merged matrix corresponding to an *l* ^{th} section in an *n* ^{th} computation stage, and ${T}_{n}^{l} i \left[p, q\right]$ represents imaginary part data corresponding to the element in the *p* ^{th} row and the *q* ^{th} column in the merged matrix corresponding to the *l* ^{th} section in the *n* ^{th} computation stage.

9. The method according to any one of claims 1 to 8, wherein the determining a product of an input sequence of the target computation stage and the merged matrix as an output sequence of the target computation stage comprises:
arranging all odd-indexed rows in the merged matrix after all even-indexed rows, or arranging all even-indexed rows in the merged matrix after all odd-indexed rows, to obtain a rearranged merged matrix; and
determining a product of the input sequence of the target computation stage and the rearranged merged matrix as the output sequence of the target computation stage.

10. The method according to any one of claims 1 to 9, wherein the dividing the FFT computation into a plurality of computation stages based on a length of the data sequence comprises:
dividing the FFT computation into the plurality of computation stages based on the length of the data sequence and priorities corresponding to a plurality of candidate radixes, and determining a radix corresponding to each computation stage, wherein the candidate radix is less than or equal to half of a computation size of a matrix multiplication unit for performing the FFT computation, and a priority of the candidate radix is in direct proportion to a value of the candidate radix.

11. The method according to any one of claims 1 to 10, wherein the at least one target computation stage is a computation stage other than the 1^{st} computation stage and the last computation stage in the plurality of computation stages.

12. An apparatus for performing FFT computation, wherein the apparatus comprises:
an obtaining module, configured to obtain, in response to a fast Fourier transform FFT computation request, a data sequence on which FFT computation is to be performed;
a division module, configured to divide the FFT computation into a plurality of computation stages based on a length of the data sequence;
a determining module, configured to: for at least one target computation stage in the plurality of computation stages, determine, based on radixes respectively corresponding to the plurality of computation stages and an execution order of the target computation stage in the plurality of computation stages, a merged matrix corresponding to the target computation stage, wherein the merged matrix is a product of a discrete Fourier transform DFT coefficient matrix and a rotation factor in the target computation stage; and
an execution module, configured to sequentially execute the plurality of computation stages, and during execution of the target computation stage, determine a product of an input sequence of the target computation stage and the merged matrix as an output sequence of the target computation stage, wherein
the determining module is configured to determine, based on an output sequence of a last computation stage in the plurality of computation stages, a computation result of the FFT computation performed on the data sequence.

13. The apparatus according to claim 12, wherein when a decimation mode corresponding to the FFT computation is decimation in time, an input sequence of a 1^{st} computation stage in the plurality of computation stages is changed to the data sequence; or
when a decimation mode corresponding to the FFT computation is decimation in frequency, an input sequence of a 1^{st} computation stage is changed to a sequence obtained by performing rearrangement processing on the data sequence, wherein the rearrangement processing is to determine the data sequence as a first multidimensional array whose dimensions at all levels are sequentially the radixes corresponding to the plurality of computation stages, and transpose the first multidimensional array to obtain a second multidimensional array, wherein an order of dimensions at all levels corresponding to the second multidimensional array is opposite to an order of the dimensions at all levels corresponding to the first multidimensional array.

14. The apparatus according to claim 13, wherein the determining module is configured to:
determine a rearrangement number corresponding to each section comprised in the target computation stage, wherein the rearrangement number indicates an arrangement order of each section in the target computation stage when the input sequence of the 1^{st} computation stage is not changed; and
determine, based on the rearrangement number of each section in the target computation stage, a merged matrix corresponding to the section.

15. The apparatus according to claim 14, wherein when the decimation mode of the FFT computation is decimation in frequency, the determining module is configured to:
obtain a third multidimensional array, wherein an order of dimensions at all levels of the third multidimensional array is opposite to an order of dimensions at all levels of a fourth multidimensional array, elements in the fourth multidimensional array are sequentially arranged from 0 and a length of the fourth multidimensional array is a quantity of sections comprised in the target computation stage, and the dimensions of the fourth multidimensional array are sequentially radixes respectively corresponding to computation stages after the target computation stage; and
sequentially determine an element in the third multidimensional array as the rearrangement number corresponding to each section comprised in the target computation stage.

16. The apparatus according to claim 14, wherein when the decimation mode of the FFT computation is decimation in time, the determining module is configured to:
obtain a fifth multidimensional array, wherein an order of dimensions at all levels of the fifth multidimensional array is opposite to an order of dimensions at all levels of a sixth multidimensional array, elements in the sixth multidimensional array are sequentially arranged from 0 and a length of the sixth multidimensional array is a quantity of sections comprised in the target computation stage, and the dimensions of the sixth multidimensional array are sequentially radixes respectively corresponding to computation stages before the target computation stage; and
sequentially determine an element in the fifth multidimensional array as the rearrangement number corresponding to each section comprised in the target computation stage.

17. The apparatus according to claim 14, wherein when the decimation mode of the FFT computation is decimation in time, the determining module is configured to:
obtain a first sequence matrix, wherein the first sequence matrix is a transposed matrix of a second sequence matrix, the second sequence matrices are sequentially arranged from 0 in row-major order, a quantity of columns of the second sequence matrix is equal to a radix of a previous computation stage of the target computation stage, and a quantity of rows of the second sequence matrix is equal to a product of radixes respectively corresponding to computation stages before the previous computation stage; and
sequentially determine an element in the first sequence matrix as the rearrangement number corresponding to each section comprised in the target computation stage.

18. The apparatus according to claim 17, wherein the apparatus further comprises a storage module, configured to:
obtain a seventh multidimensional array for each computation stage between a 2^{nd} computation stage and a second-to-last computation stage in the plurality of computation stages, wherein an order of dimensions after a dimension at a 1^{st} level of the seventh multidimensional array is the same as an order of dimensions before a dimension at a last level of an eighth multidimensional array, the dimension at the 1^{st} level of the seventh multidimensional array is equal to the dimension at the last level of the eighth multidimensional array, elements in the eighth multidimensional array are sequentially arranged from 0 and a length of the eighth multidimensional array is a quantity of sections comprised in the computation stage, the dimension at the last level is a radix corresponding to a previous computation stage of the computation stage, and the dimensions before the dimension at the last level are sequentially radixes respectively corresponding to computation stages before the previous computation stage;
determine the seventh multidimensional array as a storage order of sections in each computation stage; and
store computation results for the sections in each computation stage based on the storage order.

19. The apparatus according to any one of claims 14 to 18, wherein the determining module is configured to:
determine, based on the rearrangement number of each section in the target computation stage and location information of each element in the merged matrix, imaginary part data and real part data of each element in the merged matrix corresponding to each section, wherein the rearrangement number, the location information, and the imaginary part data and real part data of each element satisfy the following formulas: $k = \left(Alp+Bpq\right) modN ;$ ${T}_{n}^{l} r \left[p, q\right] = cos \left(-2πk/N\right) ;$ and ${T}_{n}^{l} i \left[p, q\right] = sin \left(-2πk/N\right) ;$
wherein *l* represents the rearrangement number, *A* and *B* represent preset coefficients, *N* represents a length of a data sequence, *p* and *q* respectively represent a row number and a column number of an element in a merged matrix, ${T}_{n}^{l} r \left[p, q\right]$ represents real part data corresponding to an element in a *p* ^{th} row and a *q* ^{th} column in a merged matrix corresponding to an *l* ^{th} section in an *n* ^{th} computation stage, and ${T}_{n}^{l} i \left[p, q\right]$ represents imaginary part data corresponding to the element in the *p* ^{th} row and the *q* ^{th} column in the merged matrix corresponding to the *l* ^{th} section in the *n* ^{th} computation stage.

20. The apparatus according to any one of claims 12 to 19, wherein the determining module is configured to:
arrange all odd-indexed rows in the merged matrix after all even-indexed rows, or arrange all even-indexed rows in the merged matrix after all odd-indexed rows, to obtain a rearranged merged matrix; and
determine a product of the input sequence of the target computation stage and the rearranged merged matrix as the output sequence of the target computation stage.

21. The apparatus according to any one of claims 12 to 20, wherein the division module is configured to:
divide the FFT computation into the plurality of computation stages based on the length of the data sequence and priorities corresponding to a plurality of candidate radixes, and determine a radix corresponding to each computation stage, wherein the candidate radix is less than or equal to half of a computation size of a matrix multiplication unit for performing the FFT computation, and a priority of the candidate radix is in direct proportion to a value of the candidate radix.

22. The apparatus according to any one of claims 12 to 21, wherein the at least one target computation stage is a computation stage other than the 1^{st} computation stage and the last computation stage in the plurality of computation stages.

23. A computing device, wherein the computing device comprises a processor and a memory, wherein
the processor is configured to execute instructions stored in the memory, to enable the computing device to perform the method according to any one of claims 1 to 11.

24. A computer program product comprising instructions, wherein when the instructions are run on a computing device, the computing device is enabled to perform the method according to any one of claims 1 to 11.

25. A computer-readable storage medium, comprising computer program instructions, wherein when the computer program instructions are executed by a computing device, the computing device performs the method according to any one of claims 1 to 11.
